(19) Europäisches Patentamt / European Patent Office / Office européen des brevets

(11) **EP 4 220 499 A1**

(12) **EUROPEAN PATENT APPLICATION**
published in accordance with Art. 153(4) EPC

(43) Date of publication:
**02.08.2023  Bulletin 2023/31**

(21) Application number: **21872345.0**

(22) Date of filing: **17.09.2021**

(51) International Patent Classification (IPC):
**G06N 20/00** $^{(2019.01)}$

(52) Cooperative Patent Classification (CPC):
**G06N 20/00**

(86) International application number:
**PCT/JP2021/034251**

(87) International publication number:
**WO 2022/065216 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.09.2020  JP 2020158669**

(71) Applicant: **FUJIFILM Corporation Tokyo 106-8620 (JP)**

(72) Inventor: **NAGASE, Masaya Ashigarakami-gun, Kanagawa 258-8538 (JP)**

(74) Representative: **Hughes, Andrea Michelle Dehns Germany Theresienstraße 6-8 80333 München (DE)**

(54) **FEATURE QUANTITY SELECTING METHOD, FEATURE QUANTITY SELECTING PROGRAM, FEATURE QUANTITY SELECTING DEVICE, MULTICLASS CLASSIFICATION METHOD, MULTICLASS CLASSIFICATION PROGRAM, MULTICLASS CLASSIFICATION DEVICE, AND FEATURE QUANTITY SET**

(57) The present invention is to provide a multi-class classification method, a multi-class classification program, and a multi-class classification device which can robustly and highly accurately classify a sample having a plurality of feature amounts into any of a plurality of classes based on a value of a part of the selected feature amount. In addition, the present invention is to provide a feature amount selection method, a feature amount selection program, a feature amount selection device, and a feature amount set used for such multi-class classification. The present invention handles a multi-class classification problem involving feature amount selection. The feature amount selection is a method of literally selecting in advance a feature amount needed for each subsequent processing (particularly, the multi-class classification in the present invention) from among a large number of feature amounts included in a sample. The multi-class classification is a discrimination problem that decides which of a plurality of classes a given unknown sample belongs to.

FIG. 1

EP 4 220 499 A1

**Description**

**BACKGROUND OF THE INVENTION**

1. Field of the Invention

The present invention relates to a multi-class classification method, a multi-class classification program, and a multi-class classification device which select a feature amount and classify a sample into any of a plurality of classes based on a value of the selected feature amount, and a feature amount selection method, a feature amount selection program, a feature amount selection device, and a feature amount set which are used for such multi-class classification.

2. Description of the Related Art

In recent years, although the application or expansion of machine learning in the industrial field progresses, the feature selection and the multi-class classification are still major issues. There are various feature selection methods, but an example focusing on a pairwise coupling of the class is proposed (see "Feature selection for multi-class classification using pairwise class discriminatory measure and covering concept", Hyeon Ji et al., ELECTRONICS LETTERS, 16th March 2000, vol.36, No.6, p.524-525 below). The technology disclosed in "Feature selection for multi-class classification using pairwise class discriminatory measure and covering concept", Hyeon Ji et al., ELECTRONICS LETTERS, 16th March 2000, vol.36, No.6, p.524-525 is a method focusing on that the basic class classification is "binary-class classification" with two classes, using the pairwise coupling of the class to focus on the discrimination ability of the feature amount and perform the selection.

In addition, as a method of multi-class classification, for example, a one-versus-one (OVO) method in which two-class discrimination is repeated is known.

In addition, in the field of biotechnology, for example, methods of the feature selection and the multi-class classification are actively studied for cancer and the like. Generally, it is an application of a general machine learning method, and for example, a method of the feature selection by t-test, information gain, or the like, a classification method by support vector machine (SVM), random forest, naive bayes, or the like is applied. Such a technology is disclosed in JP2012-505453A, for example.

**SUMMARY OF THE INVENTION**

The study disclosed in "Feature selection for multi-class classification using pairwise class discriminatory measure and covering concept", Hyeon Ji et al., ELECTRONICS LETTERS, 16th March 2000, vol.36, No.6, p.524-525 is limited to only the feature selection, and uses the existing method as it is in the subsequent multi-class classification. In addition, the extension to a set cover problem, which will be described below for the present invention, is not specified. Also, independence between feature amounts for selecting robust feature amounts is verified, only basic multi-class classification is assumed, and discrimination unneeded classes are not introduced. Therefore, it is difficult to apply the study as it is to the extended multi-class classification. Similarly, in the technology disclosed in JP2012-505453A, it is not considered to examine a gene cluster needed for discrimination as the set cover problem.

In addition, in the methods of repeating the two-class discrimination and performing the multi-class classification, the problem that "higher ranking cannot be trusted" is pointed out in a voting method. In addition, in the tournament hierarchy method, the problem that it is difficult to decide a comparison order is pointed out.

In cases of the feature amount selection and the multi-class classification in the field of biotechnology, there is a problem that "the accuracy drops in a case in which the number of classes handled reaches about 10" in a case of mRNA expression level base, which is often reported. For example, in one of the reports that develops a multi-class cancer classifier based on mutation information, the result is that 5 types of cancer can be discriminated with an F-number exceeding 0.70. The feature selection and the multi-class classification based on DNA methylation are also studied. However, the applied class remains in a small number of small sample-sized trials.

In recent years, although there is also the study that applies deep learning, in the first place, learning does not proceed well due to the undetermined problem of omics data (a sample size is small relative to the number of parameters; there are hundreds of thousands of methylated sites, whereas less than 10,000 open data tumor records are available). Even in a case in which study succeeds, there is a problem that, in diagnostic applications, it is difficult to accept the study because the reason for discrimination cannot be clarified.

As described above, in the related art, a sample having a plurality of feature amounts cannot be robustly and highly accurately classified into any of a plurality of classes based on a value of a part of the selected feature amount.

The present invention has been made in view of such circumstances, and is to provide a multi-class classification method, a multi-class classification program, and a multi-class classification device which can robustly and highly accurately classify a sample having a plurality of feature amounts into any of a plurality of classes based on a value of a part of the selected feature amount. In addition, the present invention is to provide a feature amount selection method, a feature amount selection program, a feature amount selection device, and a feature amount set used for such multi-class classification.

A first aspect of the present invention relates to a feature amount selection method of selecting a feature amount group to be used for determining which of N (two or more) classes a sample belongs to, the feature amount selection method comprising an input step of inputting a learning data set including a known sample group belonging to a given class, which is a target, and a feature amount group of the known sample group, and a selection step of selecting a feature amount group needed for class determination for an unknown sample of which a belonging class is unknown, from the feature amount group based on the learning data set, in which the selection step includes a quantification step of, by a pairwise coupling that combines two classes among the N classes, quantifying a discrimination possibility between the two classes in accordance with each feature amount of the selected feature amount group by using the learning data set, an optimization step of totalizing the quantified discrimination possibilities for all the pairwise couplings and selecting a combination of the feature amount groups for which a result of the totalization is to be optimized, a base class designation step of designating one or more base classes from the N classes in advance in a separate frame, and a totalization step of, for a pairwise coupling of a first class and a second class which do not include the base class among the N classes, further totalizing a discrimination possibility of pairwise between the first class and the base class and a discrimination possibility of pairwise between the second class and the base class for a feature amount having the discrimination possibility quantified in the quantification step, and in the optimization step, a balance degree of a result of the totalization in the totalization step is evaluated to select a combination of the feature amount groups.

It should be noted that, in the present invention, in a case in which a mixture of a target class specimen in a base class specimen is provided as the given sample, it is said that "it is determined (classified) that the given sample belongs to the target class" in a case in which the mixture of the target class in the given sample is detected. In addition, it is said that "it is determined (classified) that the given sample belongs to the base class" in a case in which the mixture is not detected.

A second aspect of the present invention relates to a feature amount selection method of selecting a feature amount group to be used for determining which of N (two or more) classes a sample belongs to, the feature amount selection method comprising an input step of inputting a learning data set including a known sample group belonging to a given class, which is a target, and a feature amount group of the known sample group, and a selection step of selecting a feature amount group needed for class determination for an unknown sample of which a belonging class is unknown, from the feature amount group based on the learning data set, in which the selection step further includes a quantification step of, by a pairwise coupling that combines two classes among the N classes, quantifying a discrimination possibility between the two classes in accordance with each feature amount of the selected feature amount group by using the learning data set, an optimization step of totalizing the quantified discrimination possibilities for all the pairwise couplings and selecting a combination of the feature amount groups for which a result of the totalization is to be optimized, a base class designation step of designating two or more base classes from the N classes in advance in a separate frame, and a limitation step of limiting a selection target of the feature amount group to a feature amount having no discrimination possibility between all the designated base classes.

A third aspect relates to the feature amount selection method according to the first or second aspect, further comprising a first marking step of marking a part of the given classes as first discrimination unneeded class groups that do not need to be discriminated from each other, and a first exclusion step of excluding the pairwise coupling of the marked first discrimination unneeded class groups from pairwise couplings to be expanded, in which a class belonging to the N classes and being designated as a class group that does not need to be discriminated from the base class is excluded from a target of balance selection.

A fourth aspect of the present invention relates to a feature amount selection program causing a computer to execute a feature amount selection method of selecting a feature amount group to be used for determining which of N (two or more) classes a sample belongs to, the feature amount selection method comprising an input step of inputting a learning data set including a known sample group belonging to a given class, which is a target, and a feature amount group of the known sample group, and a selection step of selecting a feature amount group needed for class determination for an unknown sample of which a belonging class is unknown, from the feature amount group based on the learning data set, in which the selection step includes a quantification step of, by a pairwise coupling that combines two classes among the N classes, quantifying a discrimination possibility between the two classes in accordance with each feature amount of the selected feature amount group by using the learning data set, an optimization step of totalizing the quantified discrimination possibilities for all the pairwise couplings and selecting a combination of the feature amount groups for which a result of the totalization is to be optimized, a base class designation step of designating one or more base classes from the N classes in advance in a separate frame, and a totalization step of, for a pairwise coupling of a first class and a second class which do not include the base class among the N classes, further totalizing a discrimination possibility of pairwise between the first class and the base class and a discrimination possibility of pairwise between the second class and the base class for a feature amount having the discrimination possibility quantified in the quantification step, and in the optimization step, a balance degree of a result of the totalization in the totalization step is evaluated to select a combination of the feature amount groups.

A fifth aspect of the present invention relates to a feature amount selection program causing a computer to execute a feature amount selection method of selecting a feature amount group to be used for determining which of N (two or more) classes a sample belongs to, the feature amount selection method comprising an input step of inputting a learning data set including a known sample group belonging to a given class, which is a target, and a feature amount group of the known sample group, and a selection step of selecting a feature amount group needed for class determination for an unknown sample of which a belonging class is unknown, from the feature amount group based on the learning data set, in which the selection step further includes a quantification step of, by a pairwise coupling that combines two classes among the N classes, quantifying a discrimination possibility between the two classes in accordance with each feature amount of the selected feature amount group by using the learning data set, an optimization step of totalizing the quantified discrimination possibilities for all the pairwise couplings and selecting a combination of the feature amount groups for which a result of the totalization is to be optimized, a base class designation step of designating two or more base classes from the N classes in advance in a separate frame, and a limitation step of limiting a selection target of the feature amount group to a feature amount having no discrimination possibility between all the designated base classes.

A sixth aspect of the present invention relates to a feature amount selection device that selects a feature amount group to be used for determining which of N (two or more) classes a sample belongs to, the feature amount selection device comprising a processor, in which the processor executes input processing of inputting a learning data set including a known sample group belonging to a given class, which is a target, and a feature amount group of the known sample group, and selection processing of selecting a feature amount group needed for class determination for an unknown sample of which a belonging class is unknown, from the feature amount group based on the learning data set, the selection processing includes quantification processing of, by a pairwise coupling that combines two classes among the N classes, quantifying a discrimination possibility between the two classes in accordance with each feature amount of the selected feature amount group by using the learning data set, optimization processing of totalizing the quantified discrimination possibilities for all the pairwise couplings and selecting a combination of the feature amount groups for which a result of the totalization is to be optimized, base class designation processing of designating one or more base classes from the N classes in advance in a separate frame, and totalization processing of, for a pairwise coupling of a first class and a second class which do not include the base class among the N classes, further totalizing a discrimination possibility of pairwise between the first class and the base class and a discrimination possibility of pairwise between the second class and the base class for a feature amount having the discrimination possibility quantified in the quantification processing, and in the optimization processing, the processor evaluates a balance degree of a result of the totalization in the totalization processing to select a combination of the feature amount groups.

A seventh aspect of the present invention relates to a feature amount selection device that selects a feature amount group to be used for determining which of N (two or more) classes a sample belongs to, the feature amount selection device comprising a processor, in which the processor executes input processing of inputting a learning data set including a known sample group belonging to a given class, which is a target, and a feature amount group of the known sample group, and selection processing of selecting a feature amount group needed for class determination for an unknown sample of which a belonging class is unknown, from the feature amount group based on the learning data set, the selection processing further includes quantification processing of, by a pairwise coupling that combines two classes among the N classes, quantifying a discrimination possibility between the two classes in accordance with each feature amount of the selected feature amount group by using the learning data set, optimization processing of totalizing the quantified discrimination possibilities for all the pairwise couplings and selecting a combination of the feature amount groups for which a result of the totalization is to be optimized, base class designation processing of designating two or more base classes from the N classes in advance in a separate frame, and limitation processing of limiting a selection target of the feature amount group to a feature amount having no discrimination possibility between all the designated base classes.

An eight aspect of the present invention relates to a multi-class classification method of determining, in a case in which N is an integer of 2 or more, which of N classes a sample belongs to, from a feature amount of the sample, the multi-class classification method comprising an acquisition step of acquiring, based on a feature amount group selected by using the feature amount selection method according to the first or second aspect, a feature amount value of the selected feature amount group, and a multi-class classification step of performing multi-class classification based on the acquired feature amount value, which includes a binary-class classification step using a binary-class classifier associated with a pairwise coupling marked in the selection of the feature amount group, in which the multi-class classification step further includes a base class designation step of designating one or more base classes from the N classes in advance in a separate frame, and a first evaluation step of, in the binary-class classification step of the base class and a first class which is any class other than the base class, in a case in which a feature amount of a given sample is close to the first class, performing weighting of the feature amount such that a case in which a discrimination result of the multi-class classification is the first class is increased.

A ninth aspect of the present invention relates to a multi-class classification method of determining, in a case in which N is an integer of 2 or more, which of N classes a sample belongs to, from a feature amount of the sample, the multi-class classification method comprising an acquisition step of acquiring, based on a feature amount group selected by using a feature amount selection method, a feature amount value of the selected feature amount group, and a multi-class classification step of performing multi-class classification based on the acquired feature amount value, which includes a binary-class classification step using a binary-class classifier associated with a pairwise coupling marked in the selection of the feature amount group, in which the multi-class classification step further includes a base class designation step of designating one or more base classes from the N classes in advance in a separate frame, and a first evaluation step of, in the binary-class classification step of the base class and a first class which is any class other than the base class, in a case in which a feature amount of a given sample is close to the first class, performing weighting of the feature amount such that a case in which a discrimination result of the multi-class classification is the first class is increased, the feature amount selection method includes an input step of inputting a learning data set including a known sample group belonging to a given class, which is a target, and a feature amount group of the known sample group, and a selection step of selecting a feature amount group needed for class determination for an unknown sample of which a belonging class is unknown, from the feature amount group based on the learning data set, and the selection step includes a quantification step of, by a pairwise coupling that combines two classes among the N classes, quantifying a discrimination possibility between the two classes in accordance with each feature amount of the selected feature amount group by using the learning data set, and an optimization step of totalizing the quantified discrimination possibilities for all the pairwise couplings and selecting a combination of the feature amount groups for which a result of the totalization is to be optimized.

It should be noted that, in the eighth and ninth aspects, for example, the eleventh to sixteenth aspects described below can be used as a method of the weighting the feature amount.

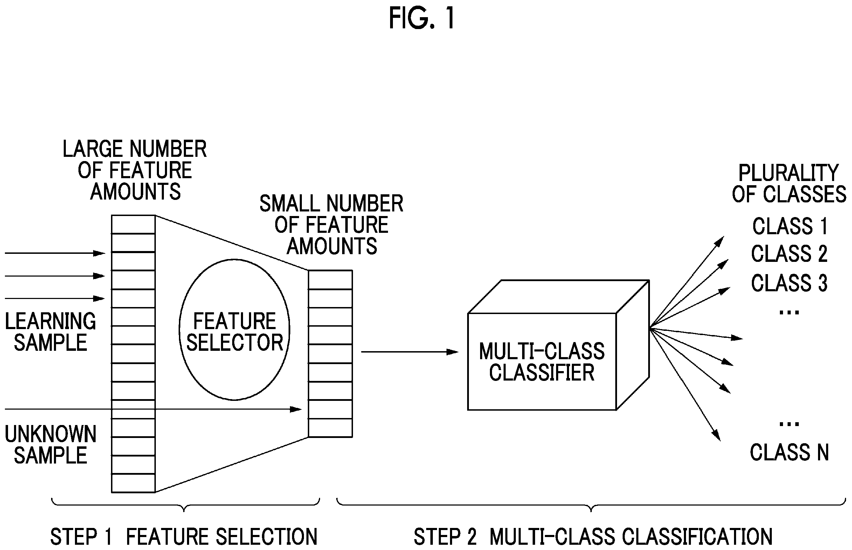

Fig. 1 is a schematic diagram of a multi-class classification problem involving feature amount selection, which is handled by the present invention. The feature selection (STEP 1) is a method (the feature amount selection method according to any one of the first to third aspects) of literally selecting in advance the feature amount needed for each subsequent processing (particularly, the multi-class classification in the present invention) from among a large number of the feature amounts included in the sample. That is, a large number of the feature amounts are acquired in advance in a certain data set (so-called learning data set), and the feature amounts (feature amount set) needed for each subsequent processing are selected based on the information. Then, in a case in which the (unknown) sample is actually given, only a small number of the feature amounts (feature amount set) selected in advance are referred to perform the multi-class classification. It should be noted that, since the unknown sample is classified in accordance with the feature amount selected only in the learning data set, it is naturally desirable that the feature amount is robust.

The feature selection is particularly useful in a case in which it takes cost (including time, cost, and the like) to refer to (including acquisition, storage, and the like) the feature amount of the sample. Therefore, for example, a unit that refers to the feature amount of the learning data and a unit that refers to the feature amount of the unknown sample may be different, and after selecting a small number of feature amounts, a suitable feature amount acquisition unit may be developed and prepared.

On the other hand, the multi-class classification (STEP2) is a discrimination problem of deciding which of a plurality of classes the given unknown sample belongs to, and is a general problem in machine learning. It should be noted that many of the actual multi-class classifications are not always the problem of simply selecting one of the N classes. For example, even in a case in which the plurality of classes actually are present, the discrimination itself may not be needed. Conversely, for example, in a sample set labeled as one class, a plurality of sample groups having different appearances may be mixed. The method withstands such a complicated extended multi-class classification is desirable.

As the simplest feature selection method, it is conceivable to evaluate all selection methods of a small number of the feature amounts from a large number of the feature amounts, which are candidates, by using the learning data set. However, since there is a risk of over-learning for the learning data set, and the number of candidates is huge and cannot be evaluated, some kind of framework is essential.

An example of applying one aspect of the present invention (multi-class classification involving the feature selection) to the field of biotechnology is shown. Cancer or a body tissue has a unique DNA methylated pattern. In addition, DNA liberated from the body tissue (cell free DNA: cfDNA) is mixed in human blood, and in particular, cfDNA derived from cancer is detected. Therefore, by analyzing the methylated pattern of cfDNA, it is possible to determine the presence or absence of the cancer and to specify the primary lesion in a case in which the cancer is present. That is, early cancer screening test by blood sampling and guidance to appropriate detailed test are realized.

Therefore, the problem of discriminating "whether it is cancer or non-cancer" and the origin tissue from the DNA methylated pattern is extremely important. This problem can be defined as the multi-class classification problem that discriminates the cancer from blood or a normal tissue. However, since there are many types of human organs (for example, 8 types of major cancers and 20 types or more of normal tissues), and there are subtypes of cancer, so that some cancers of the same organ have different aspects from each other, it can be said that the classification problem is difficult.

In addition, suppressing the measurement cost is desired from the assumption that it is used for the screening test, so that an expensive array that comprehensively measures methylated sites cannot be used as it is. Therefore, it is necessary to narrow down in advance a small number of sites needed for the discrimination from hundreds of thousands of DNA methylated sites, that is, the feature selection is needed in the previous stage.

Therefore, the technology (the method proposed in the present invention) of narrowing down a small number of DNA methylated sites and configuring the feature selection and multi-class classification methods that can discriminate the cancer from the normal tissue and specify the origin tissue based on the small number of sites is useful. It should be noted that, since the number of DNA methylated sites selected from, for example, 300,000 sites exceeds 10 to the 1,000th power, it can be seen that a comprehensive search method cannot be used.

Therefore, the inventors of the present application propose the feature selection method of listing the DNA methylated sites that act like switches that contribute to robust discrimination and being based on the combination search that sufficiently covers the pairwise discrimination of the needed classes. Further, the inventors of the present application propose the method of configuring a multi-class classifier from a simple binary classifier in combination with a tournament hierarchy method by only using a robust discrimination portion among the selected sites.

As a result, it is possible to support the multi-class classification involving the feature selection that incorporates various characteristics of actual problems. Actually, it can be applied to the multi-class classification that greatly exceeds 10 classes of cancer and normal, as seen in the example of cancer diagnosis described above. The feature amount selection and the multi-class classification methods proposed by the inventors of the present application are extremely useful in industry.

It should be noted that the present description is one of specific cases, and the eighth and ninth aspects of the present invention are not applicable only to the field of biotechnology. Actually, as many of the common machine learning technologies are applicable to the field of biotechnology, there is no problem even in a case in which the technology developed in the field of biotechnology is applied to general machine learning problems.

A tenth aspect relates to the multi-class classification method according to the eighth or ninth aspect, further comprising a marking step of marking a part of given classes as discrimination unneeded class groups that do not need to be discriminated from each other, and an exclusion step of excluding the pairwise coupling of the marked discrimination unneeded class groups from pairwise couplings to be expanded, in which the multi-class classification step is performed by using a class belonging to the N classes and being designated as a class group that does not need to be discriminated as the base class.

An eleventh aspect relates to the multi-class classification method according to any one of the eighth to tenth aspects, further comprising a reference step of, for a feature amount having a discrimination possibility in a pairwise coupling for any second class and third class belonging to the N classes, further referring to a discrimination possibility of pairwise of the second class and the base class and a discrimination possibility of pairwise of the third class and the base class, a second evaluation step of, as a result of the reference, for the second class, in a case in which there is the discrimination possibility of the pairwise of the second class and the base class and a value of the feature amount is close to the second class, performing weighting such that a case in which a discrimination result of the binary-class classification step is the second class is increased, and a third evaluation step of, as a result of the reference, for the third class, in a case in which there is the discrimination possibility of the pairwise of the third class and the base class and a value of the feature amount is close to the third class, performing weighting such that a case in which a discrimination result of the binary-class classification step is the third class is increased.

A twelfth aspect relates to the multi-class classification method according to the eleventh aspect, further comprising a configuration step of configuring a multi-class classifier from the binary-class classifier by a target value setting step of setting a target value of a misclassification probability of the sample, a first probability evaluation step of evaluating a first misclassification probability which is a probability in which a sample, which originally belongs to the base class, is misclassified into any different class other than the base class by the weighting, a second probability evaluation step of evaluating a second misclassification probability which is a probability in which a sample, which originally belongs to the different class, is misclassified into the base class, and a weighting adjustment step of adjusting the weighting such that the first misclassification probability and the second misclassification probability fall within the target value or such that deviation amounts of the first misclassification probability and the second misclassification probability from the target value are decreased, in which, in the multi-class classification step, the multi-class classification is performed by using the configured multi-class classifier. It should be noted that, in the eighth aspect, the target value may be set as different values for the first misclassification probability and the second misclassification probability, or the target value may be different for each class.

A thirteenth aspect relates to the multi-class classification method according to the twelfth aspect, further comprising a configuration step of configuring a multi-class classifier from the binary-class classifier by an evaluation parameter setting step of setting a misclassification evaluation parameter which is a part or all of the target value of the misclassification probability of the sample, the number of feature amounts having a discrimination possibility for a pairwise coupling of any first class other than the base class and the base class, reliability of the feature amount, and an assumed defective rate of the feature amount, and a weighting setting step of setting the weighting within a weighting range calculated by the misclassification evaluation parameter, in which, in the multi-class classification step, the multi-class classification is performed by using the configured multi-class classifier.

A fourteenth aspect relates to the multi-class classification method according to the thirteenth aspect, in which, in the weighting setting step, the weighting is set by learning a part or all of the misclassification evaluation parameters from any first learning data set. The first learning data set may be the same as the learning data set used for the feature amount selection.

A fifteenth aspect relates to the multi-class classification method according to any one of the eleventh to fourteenth aspects, in which, in the weighting setting step, the weighting is set such that a performance of the multi-class classification is improved based on any second learning data set. The second learning data set may be the same as the learning data set used for the feature amount selection.

A sixteenth aspect relates to the multi-class classification method according to any one of the eleventh to fifteenth aspects, further comprising a first warning step of issuing a warning to a user in a case in which an amount of the weighting does not allow a performance of the multi-class classification to fall within a performance target, or a second warning step of issuing a warning to the user in a case in which the performance target is predicted to be achievable without performing the weighting.

A seventeenth aspect of the present invention relates to a multi-class classification program causing a computer to execute a multi-class classification method of determining, in a case in which N is an integer of 2 or more, which of N classes a sample belongs to, from a feature amount of the sample, the multi-class classification method comprising an acquisition step of acquiring, based on a feature amount group selected by using the feature amount selection method according to the first or second aspect, a feature amount value of the selected feature amount group, and a multi-class classification step of performing multi-class classification based on the acquired feature amount value, which includes a binary-class classification step using a binary-class classifier associated with a pairwise coupling marked in the selection of the feature amount group, in which the multi-class classification step further includes a base class designation step of designating one or more base classes from the N classes in advance in a separate frame, and a first evaluation step of, in the binary-class classification step of the base class and a first class which is any class other than the base class, in a case in which a feature amount of a given sample is close to the first class, performing weighting of the feature amount such that a case in which a discrimination result of the multi-class classification is the first class is increased.

An eighteenth aspect of the present invention relates to a multi-class classification program causing a computer to execute a multi-class classification method of determining, in a case in which N is an integer of 2 or more, which of N classes a sample belongs to, from a feature amount of the sample, the multi-class classification method comprising an acquisition step of acquiring, based on a feature amount group selected by using a feature amount selection method, a feature amount value of the selected feature amount group, and a multi-class classification step of performing multi-class classification based on the acquired feature amount value, which includes a binary-class classification step using a binary-class classifier associated with a pairwise coupling marked in the selection of the feature amount group, in which the multi-class classification step further includes a base class designation step of designating one or more base classes from the N classes in advance in a separate frame, and a first evaluation step of, in the binary-class classification step of the base class and a first class which is any class other than the base class, in a case in which a feature amount of a given sample is close to the first class, performing weighting of the feature amount such that a case in which a discrimination result of the multi-class classification is the first class is increased, the feature amount selection method includes an input step of inputting a learning data set including a known sample group belonging to a given class, which is a target, and a feature amount group of the known sample group, and a selection step of selecting a feature amount group needed for class determination for an unknown sample of which a belonging class is unknown, from the feature amount group based on the learning data set, and the selection step includes a quantification step of, by a pairwise coupling that combines two classes among the N classes, quantifying a discrimination possibility between the two classes in accordance with each feature amount of the selected feature amount group by using the learning data set, and an optimization step of totalizing the quantified discrimination possibilities for all the pairwise couplings and selecting a combination of the feature amount groups for which a result of the totalization is to be optimized.

A nineteenth aspect of the present invention relates to a multi-class classification device that determines, in a case in which N is an integer of 2 or more, which of N classes a sample belongs to, from a feature amount of the sample, the multi-class classification device comprising a processor, in which the processor executes acquisition processing of acquiring, based on a feature amount group selected by using the feature amount selection method according to the first or second aspect, a feature amount value of the selected feature amount group, and multi-class classification processing of performing multi-class classification based on the acquired feature amount value, which includes binary-class classification processing using a binary-class classifier associated with a pairwise coupling marked in the selection of the feature amount group, and the multi-class classification processing further includes base class designation processing of designating one or more base classes from the N classes in advance in a separate frame, and first evaluation processing of, in the binary-class classification processing of the base class and a first class which is any class other than the base class, in a case in which a feature amount of a given sample is close to the first class, performing weighting of the feature amount such that a case in which a discrimination result of the multi-class classification is the first class is increased.

A twentieth aspect of the present invention relates to a multi-class classification device that determines, in a case in which N is an integer of 2 or more, which of N classes a sample belongs to, from a feature amount of the sample, the multi-class classification device comprising a processor, in which the processor executes acquisition processing of acquiring, based on a feature amount group selected by using a feature amount selection device, a feature amount value of the selected feature amount group, and multi-class classification processing of performing multi-class classification based on the acquired feature amount value, which includes binary-class classification processing using a binary-class classifier associated with a pairwise coupling marked in the selection of the feature amount group, the multi-class classification processing further includes base class designation processing of designating one or more base classes from the N classes in advance in a separate frame, and first evaluation processing of, in the binary-class classification processing of the base class and a first class which is any class other than the base class, in a case in which a feature amount of a given sample is close to the first class, performing weighting of the feature amount such that a case in which a discrimination result of the multi-class classification is the first class is increased, the feature amount selection device executes input processing of inputting a learning data set including a known sample group belonging to a given class, which is a target, and a feature amount group of the known sample group, and selection processing of selecting a feature amount group needed for class determination for an unknown sample of which a belonging class is unknown, from the feature amount group based on the learning data set, and the selection processing includes quantification processing of, by a pairwise coupling that combines two classes among the N classes, quantifying a discrimination possibility between the two classes in accordance with each feature amount of the selected feature amount group by using the learning data set, and optimization processing of totalizing the quantified discrimination possibilities for all the pairwise couplings and selecting a combination of the feature amount groups for which a result of the totalization is to be optimized.

A twenty-first aspect of the present invention relates to a feature amount set that is used by a multi-class classification device to determine which of N (two or more) classes a given sample belongs to, in which one or more base classes are designated from the N classes in advance in separate frame, the feature amount set comprises a feature amount data set of a sample belonging to each class, which is a target, in a case in which, by a pairwise coupling that combines two classes among the N classes, a discrimination possibility between the two classes in accordance with each feature amount of a selected feature amount group is quantified with reference to the feature amount data set, the feature amount set is marked to be discriminable by at least one feature amount in all the pairwise couplings, and, for a pairwise coupling of a first class and a second class which do not include the base class among the N classes, for a feature amount having the quantified discrimination possibility, a discrimination possibility of pairwise between the first class and the base class and a discrimination possibility of pairwise between the second class and the base class are further balanced.

## BRIEF DESCRIPTION OF THE DRAWINGS

Fig. 1 is a schematic diagram showing a multi-class classification problem involving feature amount selection.
Fig. 2 is a diagram showing a configuration of a multi-class classification device.
Fig. 3 is a diagram showing a configuration of a processing unit.
Fig. 4 is a flowchart showing processing of a multi-class classification method.
Figs. 5A and 5B are diagrams showing aspects of classification by a switch-like feature amount.
Figs. 6A to 6C are diagrams showing matrices of a discrimination switch value.
Figs. 7A and 7B are diagrams showing aspects of decision of a discrimination switch value and a state value.
Fig. 8 is a diagram showing exclusion of pairwise expansion between discrimination unneeded classes.
Figs. 9A and 9B are diagrams showing aspects of subclass introduction.
Figs. 10A to 10C are diagrams showing aspects of creating a brute force ranking.
Fig. 11 is a diagram showing an aspect of a final tournament match.
Fig. 12 is a diagram showing a detailed breakdown of a data set.
Fig. 13 is a diagram showing a comparison result of discrimination accuracy between the present invention and the related-art method.
Fig. 14 is a diagram showing a comparison result of robustness between the present invention and the related-art method.

Fig. 15 is a diagram showing a relationship between the number of selected feature amounts and the discrimination accuracy (F-number).

Fig. 16 is a table showing a shown example of a basis for the discrimination.

Fig. 17 is a diagram showing a relationship between the number of the selected feature amounts and a minimum cover number.

Fig. 18 is a table showing a relationship between the minimum cover number and a minimum F-number.

Figs. 19A and 19B are diagrams showing a tissue biopsy and a liquid biopsy.

Fig. 20 is a diagram for describing a problem regarding feature amount selection and multi-class classification in a case of the liquid biopsy.

Fig. 21 is a diagram showing a correspondence in a case in which a specimen derived from a target is defective.

Fig. 22 is a diagram showing correction of a score for pairwise between any target classes.

Fig. 23 is a diagram showing a state of weighting correction.

Fig. 24 is a diagram showing a state of comparison of markers between the targets.

Figs. 25A and 25B are diagrams showing a state of balance selection of the feature amount.

Fig. 26 is a diagram showing a test environment in an example according to a second embodiment.

Fig. 27 is a diagram showing an effect of the weighting correction.

Figs. 28A and 28B are diagrams showing a state in which a correction amount is set at an intermediate value between an upper limit and a lower limit.

Fig. 29 is a diagram showing learning suitability of a weighting correction amount.

Fig. 30 is a diagram showing an effect of the balance selection of the feature amount.

## DESCRIPTION OF THE PREFERRED EMBODIMENTS

In the following, embodiments of a feature amount selection method, a feature amount selection program, a feature amount selection device, a multi-class classification method, a multi-class classification program, a multi-class classification device, and a feature amount set according to the present invention will be described with reference to the attached drawings.

<First Embodiment>

<Schematic Configuration of Multi-Class Classification Device>

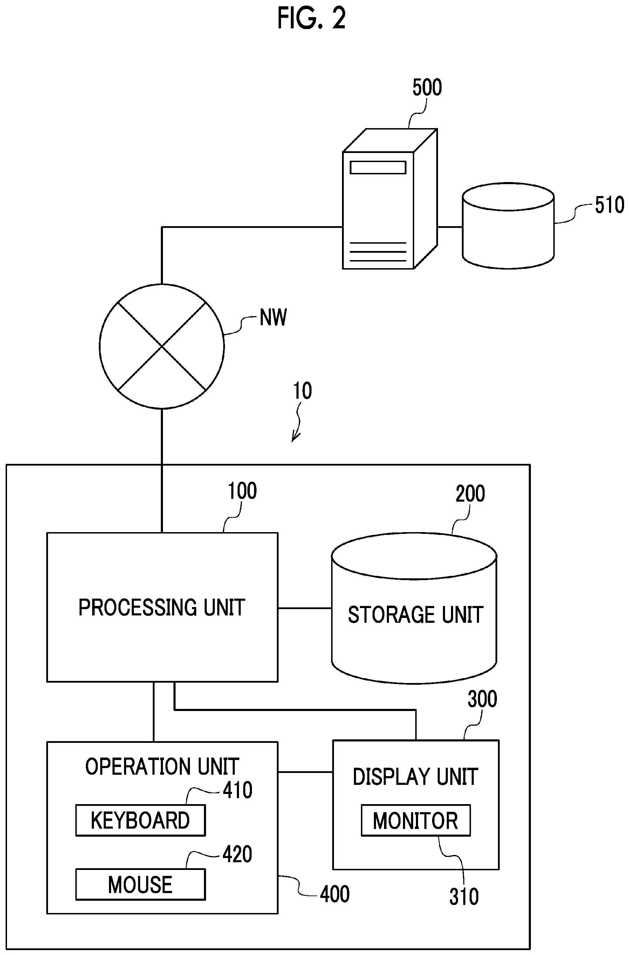

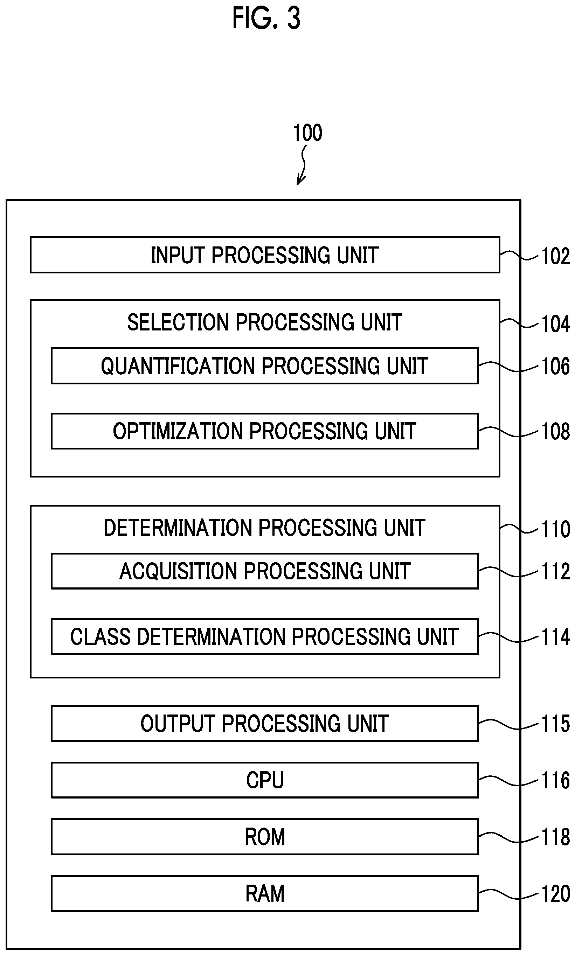

Fig. 2 is a diagram showing a schematic configuration of a multi-class classification device (multi-class classification device and feature amount selection device) according to a first embodiment. As shown in Fig. 2, a multi-class classification device 10 (feature amount selection device and multi-class classification device) according to the first embodiment comprises a processing unit 100 (processor and computer), a storage unit 200, a display unit 300, and an operation unit 400, which are connected to each other to transmit and receive needed information. These constituent elements can be installed by employing various installation forms. The constituent elements may be installed in one site (in one housing, one room, or the like) or may be installed in places separated from each other and connected via a network. In addition, the multi-class classification device 10 (input processing unit 102; see Fig. 3) connects to an external server 500 and an external database 510 via a network NW, such as the Internet, and can acquire information, such as a sample for multi-class classification, a learning data set, and a feature amount set, as needed.

<Configuration of Processing Unit>

As shown in Fig. 3, the processing unit 100 comprises the input processing unit 102, a selection processing unit 104, a determination processing unit 110, a central processing unit (CPU) 116, a read only memory (ROM) 118, and a random access memory (RAM) 120. The input processing unit 102 inputs a learning data set including a known sample group of which a belonging class is known and a feature amount group of the known sample group from the storage unit 200 or a storage device on the network and performs input processing. The selection processing unit 104 performs selection processing of selecting a feature amount group needed for the class determination for an unknown sample of which a belonging class is unknown from the feature amount group based on the input learning data set, and comprises a quantification processing unit 106 and an optimization processing unit 108. The determination processing unit 110 performs class determination (determination processing) of the unknown sample based on the selected feature amount group, and comprises an acquisition processing unit 112 and a class determination processing unit 114. An output processing unit 115 outputs a processing condition or a processing result by displaying, storing, printing, or the like. It should be noted that the processing by each of these units is performed under the control of the CPU 116 (processor and computer).

The functions of the units of the processing unit 100 can be realized using various processors and a recording medium. The various processors include, for example, a central processing unit (CPU) which is a general-purpose processor which executes software (program) to realize various functions. In addition, the various processors also include a graphics processing unit (GPU) which is a processor specialized for image processing, and a programmable logic device (PLD) which is a processor of which a circuit configuration can be changed after manufacturing, such as a field programmable gate array (FPGA). In a case in which learning or recognition of the image is performed, the configuration using the GPU is effective. Further, the various processors also include a dedicated electric circuit which is a processor having a circuit configuration designed exclusively for executing specific processing, such as an application specific integrated circuit (ASIC).

The functions of the units may be realized by one processor, or may be realized by a plurality of processors of the same type or different types (for example, a plurality of FPGAs, or a combination of the CPU and the FPGA, or a combination of the CPU and the GPU). In addition, a plurality of the functions may be realized by one processor. As an example of configuring the plurality of functions with one processor, first, as represented by a computer, there is a form in which one processor is configured by a combination of one or more CPUs and software, and the processor realizes the plurality of functions. Second, as represented by a system-on-chip (SoC) or the like, there is a form in which a processor that realizes the functions of the entire system with one integrated circuit (IC) chip is used. As described above, various functions are configured by one or more of the various processors as the hardware structure. Further, the hardware structure of these various processors is more specifically an electric circuit (circuitry) in which circuit elements, such as semiconductor elements, are combined. The electric circuit may be an electric circuit that realizes the functions using a logical sum, a logical product, a logical negation, an exclusive logical sum, and a logical operation of a combination thereof.

In a case in which the processor or the electric circuit executes software (program), a code readable by a computer (for example, various processors or electric circuits constituting the processing unit 100 and/or a combination thereof) of the executed software is stored in a non-transitory recording medium, such as the ROM 118, and the computer refers to the software. The software stored in the non-transitory recording medium includes a program (feature amount selection program and multi-class classification program) for executing the feature amount selection method and/or the multi-class classification method according to the embodiment of the present invention, and data (data related to acquisition of the learning data, and data used for the feature amount selection and the class determination) used in a case of execution. The code may be recorded in the non-transitory recording medium, such as various magneto-optical recording devices and a semiconductor memory, instead of the ROM 118. In a case of the processing using the software, for example, the RAM 120 is used as a transitory storage region, and the data stored in, for example, an electronically erasable and programmable read only memory (EEPROM) (not shown) can also be referred to. The storage unit 200 may be used as the "non-transitory recording medium".

Details of the processing by the processing unit 100 having the configuration described above will be described below.

<Configuration of Storage Unit>

The storage unit 200 is configured by various storage devices, such as a hard disk and a semiconductor memory, and a control unit thereof, and can store the learning set described above, an execution condition of the selection processing and the class determination processing and results thereof, the feature amount set and the like. The feature amount set is the feature amount set that is used by the multi-class classification device 10 to determine which of N (two or more) (N is integer of 2 or more) classes the sample belongs to and comprises the feature amount data set of the sample belonging to each class, which is a target, in which, in a case in which, by a pairwise coupling that combines two classes among the N classes, a discrimination possibility between the two classes in accordance with each feature amount of the selected feature amount group is quantified with reference to the feature amount data set, the feature amount set is marked to be discriminable by at least one feature amount in all the pairwise couplings. The feature amount set can be generated by an input step (input processing) and a selection step (selection processing) in the feature amount selection method (feature amount selection device) according to the first embodiment.

<Configuration of Display Unit>

The display unit 300 comprises a monitor 310 (display device) configured by a display, such as a liquid crystal display, and can display the acquired learning data and the result of the selection processing and/or the class determination processing. The monitor 310 may be configured by a touch panel type display, and may receive command input by a user.

<Configuration of Operation Unit>

The operation unit 400 comprises a keyboard 410 and a mouse 420, and the user can perform operations related to execution of the multi-class classification method according to the embodiment of the present invention, result display, and the like via the operation unit 400.

<1. Processing of Feature Amount Selection Method and Multi-Class Classification Method>

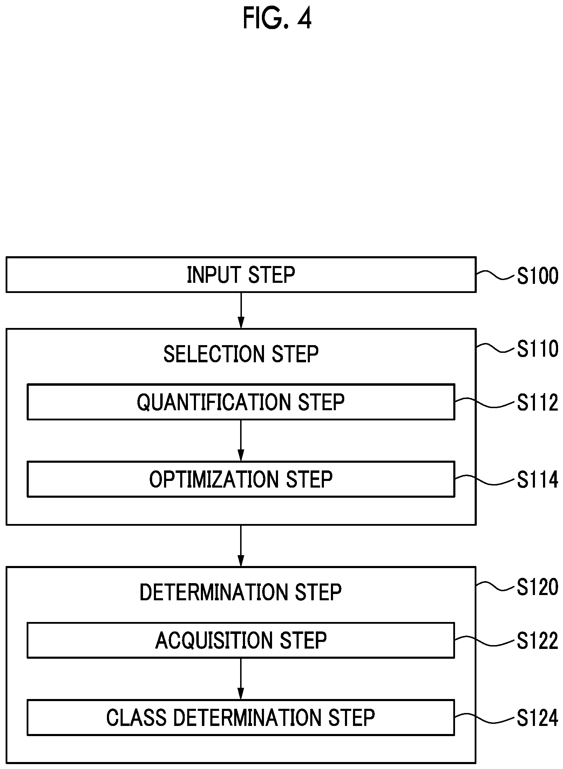

Fig. 4 is a flowchart showing basic processing of the feature amount selection method (feature amount selection program) and the multi-class classification method (multi-class classification program) according to the embodiment of the present invention. The feature amount selection method according to the embodiment of the present invention is the feature amount selection method of selecting the feature amount group used for determining which of N (two or more) classes the sample belongs to. In addition, the multi-class classification method according to the embodiment of the present invention is the multi-class classification method of determining, in a case in which N is an integer of 2 or more, which of N classes a sample belongs to, from a feature amount of the sample, the method including an acquisition step (step S100; acquisition processing) of acquiring, based on a feature amount group selected by using a feature amount selection method, a feature amount value of the selected feature amount group, and a multi-class classification step (step S 110) (multi-class classification processing) of performing multi-class classification based on the acquired feature amount value, which includes a binary-class classification step (binary-class classification processing) using a binary-class classifier associated with a pairwise coupling marked in the selection of the feature amount group.

The selection step includes a quantification step (step S112) of quantifying, by a pairwise coupling that combines two classes among the N classes, the discrimination possibility between the two classes in accordance with each feature amount of the selected feature amount group by using the learning data set, and an optimization step (step S 114) of totalizing the quantified discrimination possibilities for all the pairwise couplings and selecting a combination of the feature amount groups for which a result of the totalization is to be optimized. In addition, in the determination step, the class determination for the unknown sample is performed by configuring the multi-class discriminator that uses the selected feature amount group in association with the pairwise coupling.

<2. Basic Policy of Present Invention>

The present invention is particularly suitable in a case of selecting the feature amount having a characteristic close to a binary value, and in a case of deciding the class by combining such feature amounts like a "switch". That is, it is not a case in which it is quantitatively bonded to the feature amount linearly or non-linearly, but this is not always simple, and it is a sufficiently complicated problem in a case in which there are many switches. Therefore, the present invention is based on the policy of "searching for and selecting a combination of a large number of the feature amounts having a switch-like function, and configuring the multi-class classifier with a simple classifier".

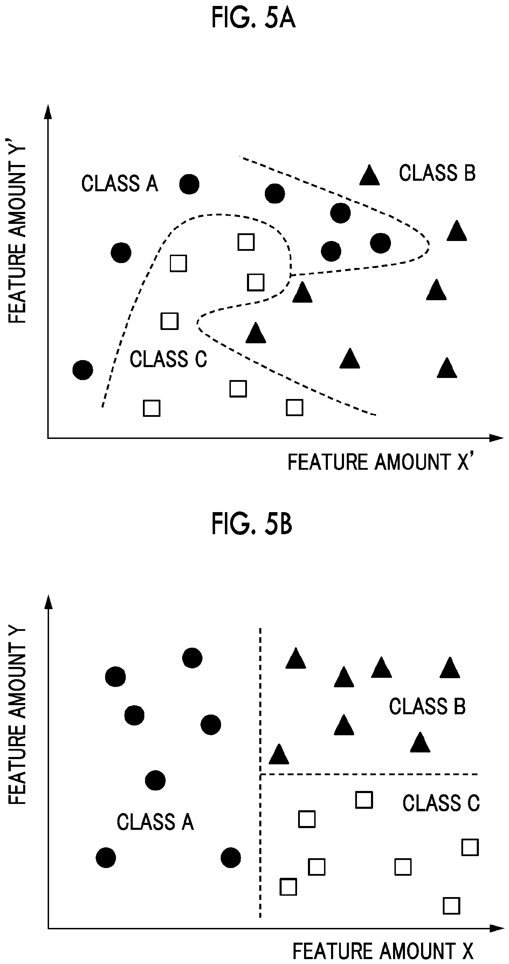

Figs. 5A and 5B are diagrams showing the "feature amount having the switch-like function" described above. Fig. 5A shows an aspect of the class classification based on a feature amount X' and the feature amount Y', which is complicated and non-linear classification. Fig. 5B shows an aspect of the class classification based on a feature amount X and a feature amount Y, which is simple and linear classification. From the viewpoint of high-accuracy and high-robust class classification, it is preferable to select the feature amount having the switch-like function as shown in Fig. 5B.

It should be noted that the learning data set is given, for every sample, values of a plurality of common feature amounts (for example, methylated sites) (note that some "defective values" may be included as values: hereinafter, referred to NA) and one correct answer class label (for example, cancer or non-cancer, and tissue classification) are given (input (input step and input processing: step S100) of the learning data set by the input processing unit 102 is performed).

In addition, although the above assumption is made here for the sake of simplicity, in a case in which a part of the sample is not given a correct answer class label, so-called semi-supervised learning may be incorporated. Since it is a combination with a known method, two typical processing examples are simply shown. A method (1) of, as a preprocessing, giving some class labels to the sample to which the correct answer class label is not given based on data comparison with the sample to which the correct answer class label is given, and a method (2) of performing cycle, such as estimating the belonging class of another unknown sample after learning with the data to which the class label is given once, and regarding the class label having high accuracy as the "correct label", increasing the learning data again, and performing learning can be used in combination.

<2.1 Feature Amount Selection Method>

In the present chapter, the selection of the feature amount (step S110: selection step) by the selection processing unit 104 (quantification processing unit 106 and optimization processing unit 108) will be described. First, the principle of feature amount selection (selection step, selection processing) according to the embodiment of the present invention will be described in a simplified case. In the following, a method of sequential extension will be described. Finally, the procedure of the feature amount selection that incorporates all the extensions is summarized. It should be noted that, understandably, all the feature amounts described in the present chapter refer to the learning data.

<2.2 Principle of Feature Amount Selection: Return to Set Cover Problem>

First, the principle of the feature amount selection (selection step) for the multi-class classification will be described. For the sake of simplicity in the present section, it is assumed that the values of all the feature amounts of the samples belonging to the same class exactly match, and the feature amounts take a fixed value of binary (0 or 1).

In a case in which a value of a feature amount i of a class s is denoted by $X_i^{(s)}$, "the classes s and t can be discriminated by the selected feature set f' means that any feature amount is different, that is, Expression (1) is satisfied.

$$\exists i \in f, X_i^{(s)} \neq X_i^{(t)} \quad \cdots \ (1)$$

Therefore, a necessary and sufficient condition that all the given classes C = {1, 2, ..., N} can be discriminated from each other is that Expression (2) is satisfied.

$$\forall \{s,t \mid s \neq t \in C\}, \exists i \in f, X_i^{(s)} \neq X_i^{(t)} \quad \cdots \ (2)$$

Here, a class binary relationship is pairwise expanded, the exclusive logical sum $Y_i^{(k)}$ (see Expression (3)) of the binary feature amounts i of the classes s and t is introduced for the pair k = {s, t} $\in P_2(C)$ in the binary combination, and this is called a "discrimination switch" (Figs. 5A and 5B).

$$Y_i^{(k=\{s,t\})} = \mathrm{xor}\left(X_i^{(s)}, X_i^{(t)}\right) \quad \cdots \ (3)$$

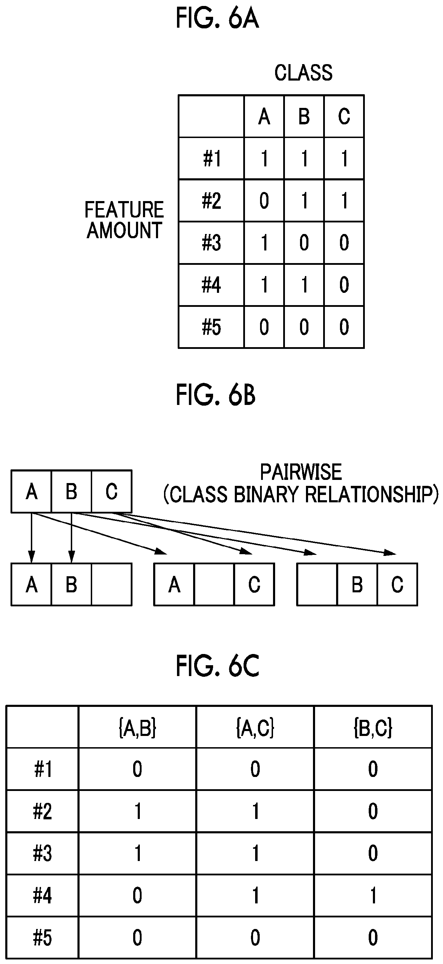

Figs. 6A to 6C are diagrams showing an aspect of calculation of a discrimination switch. Fig. 6A is a table showing the values of binary feature amounts #1 to #5 (values are 0 or 1; binary feature amount values) for classes A, B, and C, and Fig. 6B shows the aspect in which the classes A, B, and C are pairwise expanded to form pairs {A, B}, {A, C}, {B, C}. Fig. 6C shows the exclusive logical sum (value is 0 or 1; discrimination switch value) of the binary feature amounts for each pair. For example, the discrimination switch value of the feature amount #1 is 0 for the pair {A, B}, which means that "the pair {A, B} cannot be discriminated by the feature amount #1 (it cannot discriminate which of class A or B the sample belongs to)". On the other hand, for example, since the discrimination switch value of the feature amount #2 is 1 for the pair {A, B}, it can be seen that "the pair {A, B} can be discriminated by the value of the feature amount #2".

From the above, the necessary and sufficient condition that all the given classes C can be discriminated from each other can be rewritten as Expression (4).

$$\forall k \in P_2(C), \exists i \in f, Y_i^{(k)} = 1 \quad \cdots \ (4)$$

That is, in a case in which a whole feature set is denoted by F, the feature amount selection for the multi-class classification can be returned to the set cover problem of selecting a subset f $\subseteq$ F satisfying Expression (4).

It should be noted that the "set cover problem" can be defined as, for example, "a problem of selecting a subset of S such that it includes (covers) all the elements of U at least once in a case in which the set U and the subset S of a power set of U are given" (other definitions are possible).

Here, the switch set $I_i = \{k|Y_i^{(k)} = 1\}$ for the feature amount i is the subset of the binary combination $P_2(C)$ of the class. Therefore, $I = \{I_i|i \in F\}$ corresponding the whole feature set F is the subset of the power set of its family of sets, $P_2(C)$. That is, the problem is "a problem of selecting the subset (corresponding to f) of I such that it includes all elements of $P_2(C)$ at least once in a case in which the subset I (corresponding to F) of the power set of $P_2(C)$ is given", that is, it can be regarded as the set cover problem. Specifically, it is necessary to select the feature amount (and/or a combination thereof) such that at least one discrimination switch value is "1" for all pairs that are pairwise expanded. In the cases of Figs. 6A to 6C, "feature amounts #2 and #4", "feature amounts #3 and #4", or "feature amounts #2, #3, and #4" need only be selected. It should be noted that, in the value of the feature amount is NA, the pairwise discrimination switch value is automatically set to zero.

<2.3 Substitute Exclusive Logical Sum with Quantitative Value of Discrimination Possibility>

Here, in a case in which the feature amount is originally the binary value, the feature amount and its representative value (median value or the like) may be regarded as the discrimination possibility as it is. It should be noted that, in general, the feature amount is not limited to the binary value, and even samples belonging to the same class can fluctuate to various values. Therefore, the quantification processing unit 106 (selection processing unit 104) desirably substitutes the discrimination switch value (exclusive logical sum) with the quantitative value (quantification value) of discrimination possibility based on the feature amount of the learning data set.

First, the quantification processing unit 106 estimates the distribution parameter $\theta_i^{(s)}$ and the distribution $D(\theta_i^{(s)})$ of the class s and the feature amount i from the measurement value group of the feature amount i of the sample belonging to the class s (step S112: quantification step). It is particularly desirable to quantify the discrimination possibility from the distribution or the distribution parameter. It should be noted that, the sample of which the value of the feature amount is NA need only be excluded from the quantitative processing. Of course, in a case in which all the samples are NA, the feature amounts cannot be used.

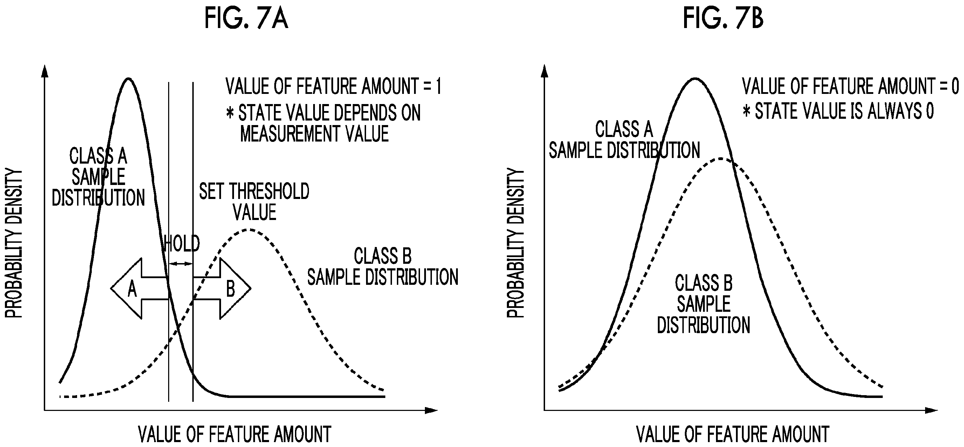

For example, the quantification processing unit 106 can obtain a p-value by performing a statistical test on the presence or absence of the significant difference between the pairwise parameter $\theta_i^{(s)}$ and $\theta_i^{(t)}$, specifically, can use Welch's t-test. The Welch's t-test is a method that assumes a normal distribution and is a general-purpose applicable method (as an image, the significant difference is determined depending on whether the feature amount distribution of s and t is close to any of Fig. 7A or Fig. 7B). Of course, based on the statistical properties of the feature amount, an observation result, or an analysis result, a timely and appropriate distribution and the corresponding statistical test method may be adopted.

Figs. 7A and 7B are diagrams showing decision images of the discrimination switch value and a state value. Fig. 7A is a case in which the feature amount is used for the discrimination of the pairwise {A, B}, and the quantification processing unit 106 sets a threshold value (value at a position of two vertical lines in Fig. 7A) from the learning data, and decides the discrimination switch state value from the measurement value of the target sample (step S112: quantification step). The state value is +1 in a case in which the measurement value belongs to an A side of the distribution, the state value is -1 in a case in which the measurement value belongs to a B side thereof, and the state value is 0 in a case in which the measurement value belongs to a holding region. Fig. 7B is a case in which the feature amount is not used for the discrimination of the pairwise {A, B} in the first place ($Y_i^{(\{A,B\})} = 0$).

It should be noted that, in a case in which there are a particularly large number of feature amount candidates, in a case in which the determination is repeated for whole feature set F, a multiple comparison test will occur. Therefore, the quantification processing unit 106 desirably corrects a p-value group obtained for the same pairwise k = {s, t} to a so-called q-value group (step S112: quantification step). Examples of the method of multiple test correction include the Bonferroni method and the BH method [Benjamini, Y, and Y. Hochberg, 1995], and a more desirable method is the latter method of performing correction to a so-called false discovery rate (FDR), but it is not limited to this.

As shown in Expression (5), the quantification processing unit 106 compares the obtained q-value with a predetermined reference value $\alpha$ and assigns 0 or 1 to the discrimination switch (particularly, a case in which the discrimination switch is 1 is called "marked").

$$Y_i^{(k=\{s,t\})} = \begin{cases} 1 \text{ if } q \leq \alpha \\ 0 \text{ if } q > \alpha \end{cases} \quad \cdots \quad (5)$$

It should be noted that, the discrimination switch is discretized and binarized from the standpoint of extending the set cover problem, but continuous variables may be handled, for example, by setting the discrimination switch to 1-q.

Further, since the p-value or the q-value is the statistical difference and not the probability that the sample can be discriminated, the quantification processing unit 106 may further perform, under the appropriate threshold value which is set with reference to the learning data set, the quantification by the probability that the belonging class can be correctly discriminated by the feature amount in a case in which the feature amount is given to the unknown sample belonging to any of the pairwise-coupled classes. In addition, the quantification processing unit 106 may correct such a statistical probability value by the multiple test correction in accordance with the number of the feature amounts.

In addition, in addition to the reference related to the statistical test, the reference value, such as having a certain difference in the average value, may be added or used as a substitute. Of course, various statistics other than the average value and the standard deviation may be used as the reference.

<2.4 Extension of Set Cover Problem to Optimization Problem, such as Maximizing Minimum Pairwise Cover Number>

In a case in which the feature amount is a random variable, even in a case in which the discrimination switch is marked, it is not always possible to reliably discriminate the corresponding pairwise. Therefore, it is desirable to extend the set cover problem.

Therefore, as shown in Expression (6), the quantification processing unit 106 (selection processing unit 104) totals the quantitative value of the discrimination possibilities by using discrimination redundancy as the pairwise cover number $Z_f^{(k)}$ (calculation of the totalized value as the total value; step S 112, quantification step).

$$ Z_f^{(k \in P_2(C))} = \sum_{i \in f} Y_i^{(k)} \quad \cdots \quad (6) $$

The definition of $Z_f^{(k)}$ is not limited to the definition shown in Expression (6). For example, for the continuous variable version of $-Y_i^{(k)}$, it may be defined as the product of $(1 - Y_i^{(k)})$ as the probability that all discriminations will fail, or the success probability of at least U discriminations may be calculated from $Y_i^{(k)}$ by using a certain appropriate threshold value U. In addition, an average value of individual discrimination possibilities may be calculated. In this way, various totalizing methods can be considered.

Next, from the standpoint that "it is desirable to reduce the bottleneck of the discrimination as much as possible", the optimization processing unit 108 (selection processing unit 104) can return to the feature amount selection problem to the problem of maximizing the minimum pairwise cover number again with the number of the feature amounts to be selected denoted by m, by Expression (7) (step S 114: optimization step, optimization processing).

$$ \arg\max_{f \subseteq F, |f| = m} \min\left\{ Z_f^{(k)} \,\middle|\, k \in P_2(C) \right\} \quad \cdots \quad (7) $$

The above is an example of return in a case in which the selected number of the feature amounts is determined (in a case in which the selected number M of the feature amounts is input, that is, in a case in which the selected number input step/processing is performed). On the contrary, the optimization processing unit 108 (selection processing unit 104) may set the threshold value (target threshold value T) for the minimum pairwise cover number (minimum value of the totalized value of the discrimination possibilities) (target threshold value input step/processing), and may select the feature amount so satisfy the threshold value (step S 114: optimization step/processing, selection step/processing). In this case, of course, it is desirable that the number of the feature amounts to be selected be smaller, and it is particularly preferable that the number of the feature amounts be the minimum.

Alternatively, various optimization methods, such as combining these two, can be considered.

Since the set cover problem is a field that is actively studied, there are various solutions. The problem of maximizing the minimum cover number, which is an extension of this, can be handled with in almost the same procedure. It should be noted that, since it is generally an NP-complete problem, it is not easy to obtain an exact solution.

Therefore, of course, it is desirable to obtain the exact solution and literally solve the problem of maximizing the minimum pairwise cover number and the problem of achieving the set cover number with the minimum feature amount, but the optimization processing unit 108 (selection processing unit 104) may use a method of increasing the cover number as much as possible, reducing the number of the selected feature amounts as much as possible, or obtaining a local minimum, by a heuristic method.

Specifically, for example, the optimization processing unit 108 (selection processing unit 104) may adopt a simple greedy search procedure. In addition to the minimum pairwise cover number of the currently selected feature set, "a method of sequentially defining i-th smallest i-th rank pairwise cover number, and sequentially selecting the feature amount that maximizes the i-th rank pairwise cover number of smaller i" can be considered.

Further, the importance of the class or the pairwise discrimination may be input (step S 112: quantification step, importance input step/processing), and weighting based on the importance may be performed in a case of the optimization (weighting step/processing). For example, Expression (7) can be modified to Expression (8).

$$\text{argmax min } \{Zk/wk\} \dots (8)$$

Here, $w_k$ indicates the importance of the pairwise discrimination. Alternatively, the importance of the class may be designated to obtain $w_k = w_s w_t$ and the like, and the importance of the pairwise may be decided based on the importance of the class. It should be noted that, the calculation expression that reflects the importance of the class of the pairwise based on the product is merely an example, and the specific calculation expression for weighting may be another method to the same effect.

Specifically, for example, in a case in which the discrimination between a disease A and a disease B is particularly important in the discrimination of pathological tissues, while the discrimination between the disease B and a disease C is not important, it is desirable to set a large value to wk = {A, B} and set a small value to wk = {B, C}. As a result, for example, the method of appropriate feature amount selection or class classification (diagnosis) can be provided in a case in which early detection of the disease A is particularly important but a symptom thereof is similar to a symptom of the disease B, and in a case in which early detection of the disease B and the disease C are not important and there is a large difference in the symptoms from each other.

<2.5 Exclusion of Similar Feature Amount>

In general, since the feature amount with high similarity (degree of similarity) that take close values in the entire discrimination target class have high correlation, it is desirable to avoid overlapping selection in consideration of the robustness of the discrimination. In addition, since the optimization search described in the previous term can be made more efficient in a case in which |F| can be reduced, the optimization processing unit 108 (selection processing unit 104) desirably narrows down the feature amount to be considered in advance based on the evaluation result of the similarity (step S 110: selection step/processing, similarity evaluation step/processing, priority setting step/processing). Actually, for example, there are hundreds of thousands of methylated sites.

Here, the set of k $I_i = \{k|Y_i^{(k)} = 1\}$ in which $Y_i^{(k)} = 1$ for the feature amount i is called the "switch set". From this switch set, it is possible to consider the similarity (or degree of similarity) of the feature amounts, that is, the equivalence relationship (overlap relationship) and the inclusion relationship of the feature amounts.

For the feature amount i, all l in which $I_i = I_1$ is collected, and the equivalent feature set Ui is created as shown in Expression (9). In addition, all l as $I_i \supset I_1$ is collected to create an inclusion feature set Hi as shown in Expression (10).

$$U_i = \left\{ i, l_1^{(i)}, l_2^{(i)}, \dots \middle| I_i = I_{l_*^{(i)}} \right\} \quad \cdots \quad (9)$$

$$H_i = \left\{ l_1^{(i)}, l_2^{(i)}, \dots \middle| I_i \supset I_l \right\} \quad \cdots \quad (10)$$

Since the equivalent feature set is obtained by grouping the overlapping feature amounts and the inclusion feature set is obtained by grouping the dependent feature amounts, the feature amount having high similarity can be excluded by narrowing down the feature amounts to one representative feature amount. Therefore, for example, the whole feature set F may be replaced with the similar exclusion feature set as in Expression (11).

$$F' = F \setminus \left\{ \left\{ l^{(i)} \middle| \exists U_i, l^{(i)} \neq i, l^{(i)} \in U_i \right\} \cup \left\{ l^{(i)} \middle| \exists H_i, l^{(i)} \in H_i \right\} \right\} \quad \cdots \quad (11)$$

Of course, the selection processing unit 104 may consider only one of the equivalent feature set or the inclusion feature set as the similarity, or may create another index. For example, a method of obtaining a vector distance between the feature amounts (distance between discrimination possibility vectors) and regarding the vector distance equal to or less than a certain threshold value as the similar feature amount can be considered. In addition to the simple distance, any distance or a metric value equivalent thereto may be introduced, such as normalizing the discrimination possibilities of a plurality of feature amounts and then calculating the distance.

Further, although the narrowing down is performed in the above, the selection processing unit 104 may use a method of lowering the selection priority (priority) of the feature amount for which the similar feature amount is already selected in a case of the optimization search (priority setting step) to decide the ease of selection. Of course, a method of raising the selection priority (priority) of the feature amount having a low degree of similarity to the already selected feature amount (priority setting step) may be used.

<2.6 Introduction of Discrimination Unneeded Pairwise (Class Set)>

The class binary relationship extends to $|P_2(C)| = {}_NC_2$ for the given class number N. This is simply the binary relationship of the class, but there may be pairwise that does not need to be discriminated in practice.

For example, in a case of assuming a cancer diagnosis problem (see examples described below), the discrimination between the cancer tissues and the discrimination between the cancer tissue and the normal tissue is essential, but the discrimination between the normal tissues is not needed.

Therefore, the selection processing unit 104 may partially suppress the pairwise expansion of the class binary relationship. That is, the given class C = {c|c $\in$ C$_T$, C$_N$} is divided by the class set C$_T$ that needs to be discriminated and the class set C$_N$ that does not need to be discriminated (first discrimination unneeded class group) to make consideration between C$_T$ and C$_T$, and between C$_T$ and C$_N$ (pairwise expansion), while the pair of C$_N$ is excluded from the class binary relationship (step S110: selection step, first marking step/processing, first exclusion step/processing). That is, the selection processing unit 104 calculates P$_2$(C)' by Expression (12), and replaces the existing P$_2$(C) with P$_2$(C)'.

$$P_2\left(C\right)^{'} = P_2\left(C\right) \backslash \left\{ \left\{s,t\right\} \middle| s \neq t \in C_N \right\} \quad \cdots \quad (1\,2)$$

It should be noted that, two or more such divisions or marks may be present.

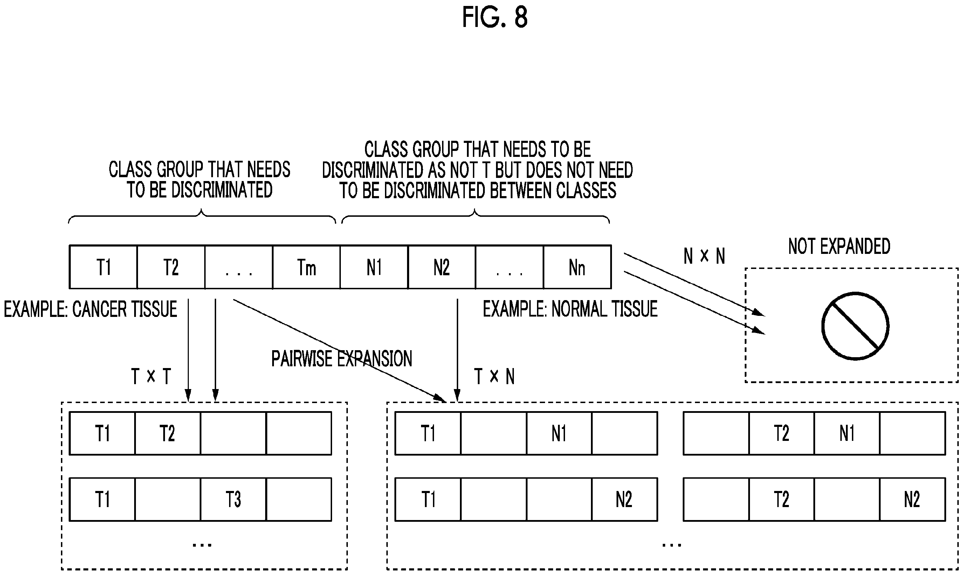

Fig. 8 is a diagram showing an aspect in which the pairwise expansion is partially suppressed. In the example of Fig. 8, classes T1, T2, ..., Tm are a class group (for example, cancer tissues) that needs to be discriminated between the classes, and classes N1, N2, ..., Nn are a class group (for example, normal tissues) that needs to be discriminated as "not T (not the cancer tissue)" but does not need to be discriminated between the classes.

In this case, the selection processing unit 104 performs the pairwise expansion between the classes T (for example, classes T1 and T2 and classes T1 and T3) and between the class T and the class N (for example, classes T1 and N1 and classes T1 and N2), but does not perform the pairwise expansion between the classes N.

<2.7 Introduction of Subclass from Sample Clustering>

Even in a case in which the correct answer class label is given to the sample, there is a case in which a plurality of groups with different appearances are actually mixed in the sample of the same class nominally. Even in a case in which it is sufficient to discriminate the nominal class, the feature amounts do not always follow the same distribution parameter, so that the discrimination switch cannot be correctly given.

For example, there are subtypes of the cancer, and some cancers of the same organ have different appearances [Holm, Karolina, et al., 2010]. It should be noted that, in a case in which application to the screening test (combined with detailed tests) is assumed, it is not needed to discriminate the subtype.

Therefore, in order to correspond to the subtype, a special class unit called the subclasses, which do not need to be discriminated from each other, may be introduced (step S110: selection step, subclass setting step/processing, second marking step/processing).

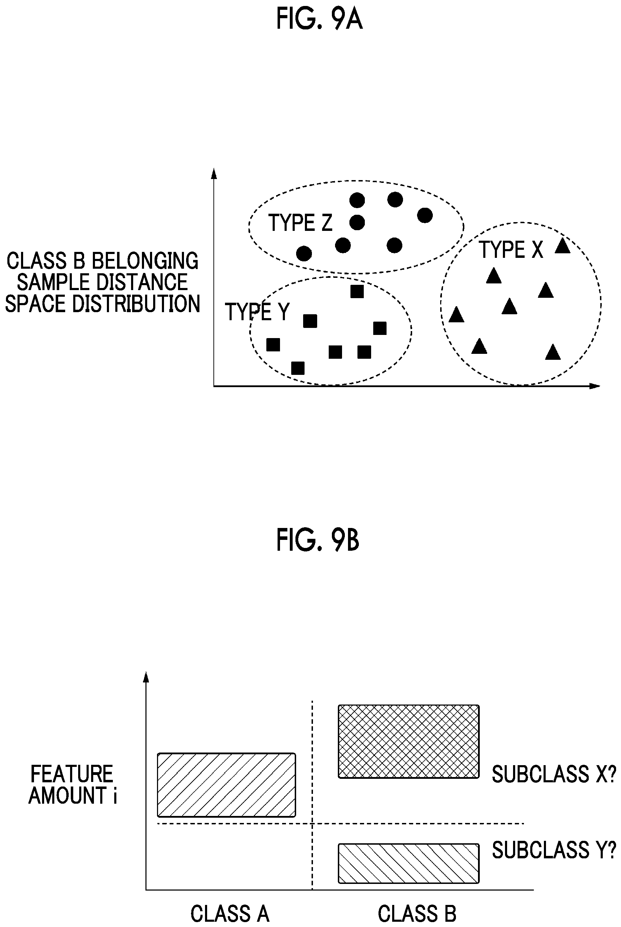

The subclass can be automatically configured from samples. It should be noted that, since it is difficult to perform identification from a single feature amount, a method can be considered in which the selection processing unit 104 clusters (forms a cluster) the sample by the total feature amount (given feature amount) for each class and divides an appropriate cluster number L (or minimum cluster size nc) to make the subclass correspond to the cluster. For example, as shown in Fig. 9A, the samples belonging to a certain class (here, class B) are clustered using all the feature amounts, and based on the result, the samples are divided into the subclasses X and Y as shown in Fig. 9B. In this example, in a case in which the class B is divided into the subclasses X and Y, the feature amount i can be used for the discrimination between the class A and the subclass Y of the class B. It should be noted that, there is a case in which a certain class is accidentally divided into a plurality of subclasses, and in that case, it is nonsense to forcibly consider it as the "subclass".

It should be noted that there are various clustering methods, clustering may be performed by another method, and clustering criteria may be set in various ways.

For example, in a case in which the class J is divided into $\{J_1, J_2, \ldots, J_L\}$ (second discrimination unneeded class group), the given class $C = \{1, 2, \ldots, J, \ldots, N\}$ can be extended by Expression (13).

$$C^{+J} = \{1, 2, \ldots, J_1, J_2, \ldots, J_L, \ldots, N\} \quad \cdots \quad (13)$$

As in the previous term, the class binary relationship is replaced by Expression (14) by excluding the pair of subclasses that do not need to be discriminated (second exclusion step).

$$P_2\left(C^{+J}\right)^{'-J} = P_2\left(C^{+J}\right)' \setminus \left\{\{s, t\} \middle| s \neq t \in J_*\right\} \quad \cdots \quad (14)$$

It should be noted that the final class binary relationship applied sequentially including the previous term $C_N$ is referred to as $P_2(C^{+C})^{'-C}$.

<2.8 Summary of Procedure of Feature Selection Method>

The procedure of the feature selection method (selection step by the selection processing unit 104, selection processing) proposed by the inventors of the present application is summarized.

(i) In the given class set C, the class set $C_N$ that does not need to be discriminated is set.

(ii) The samples are clustered for each class with all the feature amounts to make each obtained cluster correspond to the subclass (subclasses are special classes that do not need to be discriminated from each other).

(iii) The pairwise expansion $P_2(C^{+C})^{'-C}$ of all the class binary relationships, which are discrimination targets, excluding those that do not need to be discriminated is determined.

(iv) The distribution parameter from the sample belonging to each class is estimated and the significant difference in the feature amount in the class pair $k = \{s, t\}$ is determined by the statistical test to assign 0/1 to the discrimination switch $Y_i^{(k = \{s, t\})}$.

(v) From the discrimination switch, the equivalent feature amount set and the inclusion feature amount set are configured to create the similar exclusion feature set F'.

(vi) The feature set f (feature amount set) that maximizes the minimum value of the pairwise cover number $Z_f^{(k)}$ obtained from the sum of the discrimination switches is selected from the F' for the entire pairwise expansion $P_2(C^{+C})^{'-C}$ of the discrimination target class.

It should be noted that, the above i to vi are comprehensive examples, and it is not always needed to implement all of the above i to vi, and there may be a procedure of partially rejecting the above i to vi. In addition, of course, the configuration may be used in which the alternative method specified or suggested in each section is used. It should be noted that the multi-class classification device 10 may execute only the steps of the feature amount selection method (feature amount selection method, feature amount selection processing) to obtain the feature amount set used for the multi-class classification.

<3. Multi-Class Classification Method>

In the present chapter, the processing (step S120: determination step, determination processing) performed by the class determination processing unit 114 (determination processing unit 110) will be described. First, a configuration example (class determination step, determination step) of the binary-class classifier (binary-class discriminator) based on the selected feature amount (selected feature amount group, feature amount set) will be described. Next, an example (class determination step, determination step) of a method of configuring (configuring the multi-class discriminator that uses the selected feature amount group in association with the pairwise coupling) the multi-class classifier (multi-class discriminator) from the binary-class classifier, by two-stage procedure of (1) brute force match ranking and (2) final tournament match will be described.

<3.1 Configuration of Binary-Class Classifier>

The fact that the feature amount that contributes to the pairwise discrimination is selected will be utilized. Therefore, the binary-class classifier can be configured only from the combination of the pairwise and the feature amount marked with the discrimination switch (each of the binary-class discriminator that use the selected feature amount group in association with each pairwise coupling is configured). It should be noted that in a case of the class classification, the acquisition processing unit 112 acquires the value of the feature amount of the selected feature amount group (step S122: acquisition step, acquisition processing).

For example, the class determination processing unit 114 (determination processing unit 110) can decide the discrimination switch state $y_i^{(k = (s, t), j)}$ for the class pairwise {s, t} of the given sample j (belonging class is unknown) and the selected feature amount i by comparing with the learning distribution (step S124: class determination step, see Figs. 7A and 7B). First, the distribution is estimated from the learning data to determine the significant difference (whether it is the state shown in Fig. 7A or the state shown in Fig. 7B), and in a case of "there is the significant difference", a threshold value is set in advance. Then, the class determination processing unit 114 estimates the belonging distribution (or whether does not belong to) from the value of the feature amount in a case in which the given sample is classified only in a case in which "there is the significant difference" is selected, to decide the discrimination switch state value as shown in Expression (15) (step S124: class determination step).

$$
y_i^{(k=(s,t),j)} = \begin{cases} +1 \text{ if } Y_i^{(k)} = 1 \text{ and } x_i^{(?,j)} \sim D\left(\theta_i^{(s)}\right) \\ 0 \text{ if } Y_i^{(k)} = 0 \text{ or } x_i^{(?,j)} \nsim D\left(\theta_i^{(s)}\right), D\left(\theta_i^{(t)}\right) \quad \cdots \ (1\ 5) \\ -1 \text{ if } Y_i^{(k)} = 1 \text{ and } x_i^{(?,j)} \sim D\left(\theta_i^{(t)}\right) \end{cases}
$$

It should be noted that the "?" in Expression (15) indicates that the class to which the sample x belongs is unknown. In addition, in a case in which the value of the feature amount of the sample is NA, y is set to 0.

The class determination processing unit 114 (determination processing unit 110) totals the above values to calculate a discrimination score $r_j(s, t)$, and configures the binary-class classifier $B_j(s, t)$ as shown in Expressions (16) and (17) (step S124: class determination step)

$$
r_j\left(s,t\right) = \sum_{i \in f} y_i^{(k=\{s,t\},j)} \qquad \cdots \ (1\ 6)
$$

$$
B_j\left(s,t\right) = \begin{cases} s \text{ if } r_j(s,t) > 0 \\ t \text{ if } r_j(s,t) < 0 \end{cases} \quad \cdots \ (1\ 7)
$$

<3.2 Procedure (1) of Multi-Class Classification: Brute Force Match Ranking>

The class determination processing unit 114 (determination processing unit 110) can further total the above-described discrimination scores (note that, in order to normalize the number of discrimination switches, it is desirable to take a code value) to calculate a class score (pair score) as shown in Expression (18) (step S124: class determination step).

$$
R_j\left(s\right) = \sum_{\left\{t \middle| \{s,t\} \in P_2\left(C^{+C}\right)^{,-C}\right\}} \mathrm{sgn}\left(r_j\left(s,t\right)\right) \quad \cdots \ (1\ 8)
$$

This class score indicates "how similar the unknown sample j is to the class s". Further, the class determination processing unit 114 (determination processing unit 110) lists the discrimination candidate classes in descending order of the class score and creates a brute force match ranking G (step S124: class determination step). In a case of the creation, replacement processing (replace with +1 in a case in which the class score is positive, leave the value at ± 0 in a case in which the class score is zero, and replace the value with -1 in a case in which the class score is negative) may be performed.

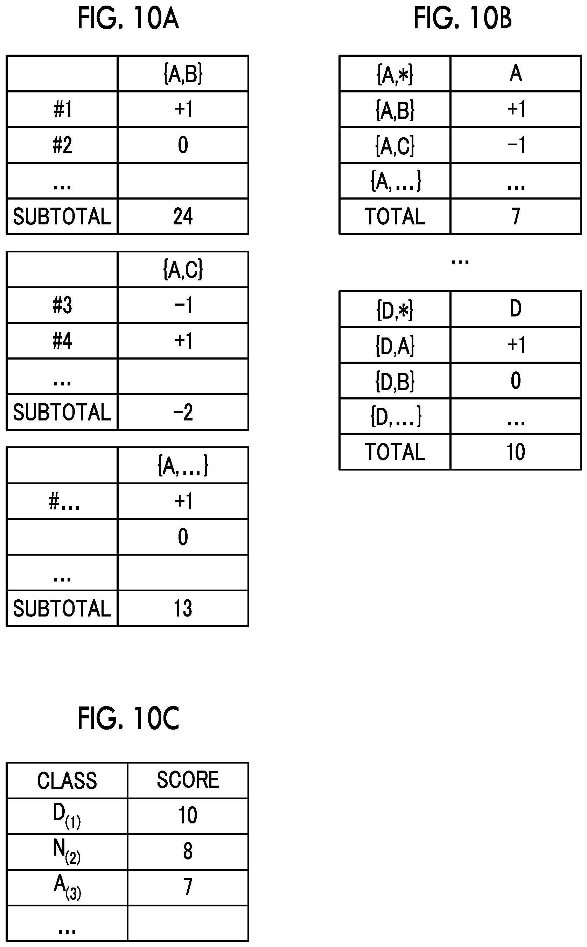

Figs. 10A to 10C are diagrams showing aspects of creating the brute force match ranking. First, as shown in Fig. 10A, the class determination processing unit 114 totals the code value (Sgn ($r_j$(s, t)) in Expression (17)) of the discrimination score for each class pair ({A, B}, {A, C}, ...). For example, "the sample is similar to the class A in terms of the value of feature amount #1 (code value = +1), and cannot be said to be any of the class A or B in terms of the value of feature amount #2 (code value = 0)... " for the class pair {A, B}, and the subtotal is 24. Therefore, it can be said that "the sample is similar to A in the classes A and B" (as the subtotal value is positive and the absolute value is larger, the degree of similarity is higher). In addition, "the sample is similar to the class C in terms of the value of feature amount #3 (code value = - 1), and is similar to the class A in terms of the value of feature amount #4 (code value = +1) ... " for the class pair {A, C}, and the subtotal is -2. Therefore, it can be said that "the sample is not similar to any of the class A or C (or is slightly similar to the class C)".

In a case in which the subtotal is calculated for all the class pairs in this way, the result shown in Fig. 10B is obtained. For example, {A, *} is the "comparison result between the class A and all other classes", and the total score after replacement described above is 7. Similarly, the total for the class D is 10. Then, the class determination processing unit 114 lists (ranks) the discrimination candidate classes from this total as shown in Fig. 10C. In this example, the totals for the classes D, N, and A are 10, 8, 7, respectively, the class D is first rank, the class N is second rank, and the class A is third rank.

<3.3 Procedure (2) of Multi-Class Classification: Final Tournament Match>

In multi-class classification including the present problem, the discrimination between the similar classes often becomes a performance bottleneck. Therefore, in the present invention, the feature amount group (feature amount set) capable of discriminating all the pairwise including the similar classes is selected.

On the other hand, in the brute force match ranking G, although it is expected that highly similar classes will gather near the top rank, most of the class scores are determined by comparison with the lower rank classes. That is, the ranking near the top rank (ranking between the classes D, N, and A in the examples of Figs. 10A to 10C) is not always reliable.

Therefore, the class determination processing unit 114 (determination processing unit 110) can decide the final discrimination class based on an irregular tournament match $T_j$ of g higher rank classes in the brute force match ranking, as shown in Expression (19) (step S124: class determination step).

$$T_j\left(G_1, G_2, ..., G_g\right) = T_j\left(G_1, ..., G_{g-2}, B_j\left(G_{g-1}, G_g\right)\right)$$
$$= ... = B_j\left(G_1, B_j\left(G_2, ..., B_j(G_{g-1}, G_g)...\right)\right) \qquad \cdots \ (1\,9)$$

That is, the class determination processing unit 114 applies the binary-class classifier again to the pairwise of the lower rank two classes from the g classes at the higher rank of the list, determines survival to reduce the number of lists by one, and sequentially performs the same procedures (finally, the G top rank class is compared with the surviving class).

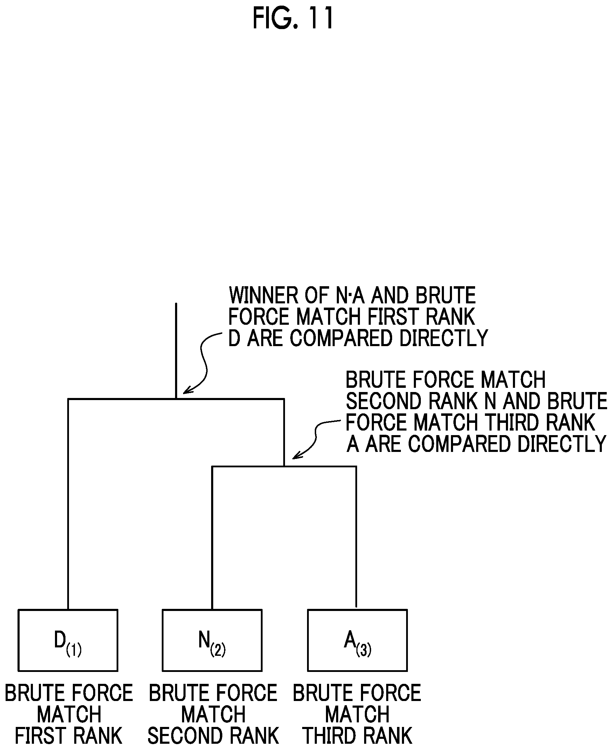

For example, as shown in Fig. 11, the class score is calculated for the lower rank two classes N and A from the three classes (classes D, N, and A) at the higher rank of the list to determine survival (class N or A), the class score is calculated in the same way for the class D, which is the top rank class in the brute force ranking, and the surviving class. It should be noted that, "how many ranks in the brute force ranking are targeted for the final tournament match (up to third rank in the example of Fig. 11)" is not particularly limited.

<3.4 Configuration of Other Multi-Class Classifiers>

It should be noted that the above description is an example of the classifier configuration, and various machine learning methods may be used in addition to the above example. For example, the configuration may be basically a random forest configuration, in which only those for which the discrimination switch of the selected feature amount is effective are used (determination step) in the decision tree in the middle. Specifically, the class determination processing unit 114 (determination processing unit 110) may configure the decision tree that uses the selected feature amount group in association with each pairwise coupling, and may combine one or more decision trees to configure the multi-class discriminator (step S124: class determination step). In this case, the class determination processing unit 114 may configure the multi-class discriminator as the random forest by combining the decision tree and the decision tree (step S124: class determination step).

<4. Output>

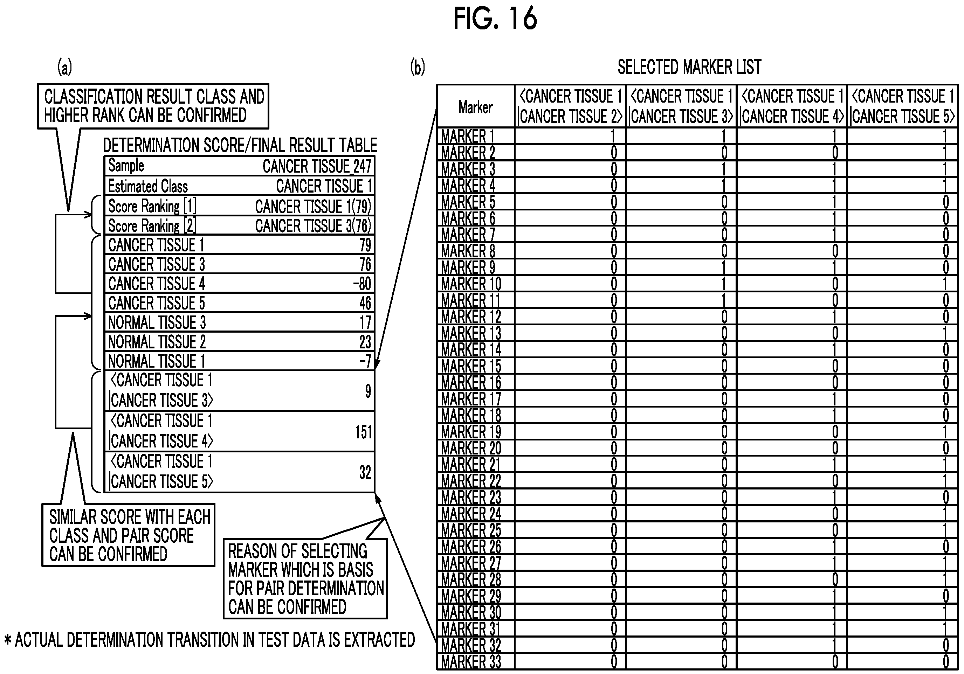

The output processing unit 115 can output the input data, the processing condition described above, the result, and the like in accordance with the operation of the user via the operation unit 400 or without the operation of the user. For example, the output processing unit 115 can output the input learning data set, the selected feature amount set, the result of the brute force match ranking or the final tournament match, and the like by the display on the display device, such as the monitor 310, the storage in the storage device, such as the storage unit 200, the print by a printer (not shown), and the like (output step, output processing; Fig. 16 will be described below).

<5. Test Data and Examples>

The inventors of the present application select 8 types (large intestine cancer, stomach cancer, lung cancer, breast cancer, prostate cancer, pancreatic cancer, liver cancer, and cervical cancer) of the cancer, which are diagnosis targets. Since these cancers account for about 70% of Japanese cancers [Hori M, Matsuda T, et al., 2015], these cancers are considered to be an appropriate target for the early screening test.

In addition, since normal tissue needs to cover everything that can flow out into the blood, a total of 24 possible types, such as blood, kidney, and thyroid gland, are listed in addition to the organs corresponding to the 8 types of the cancer.

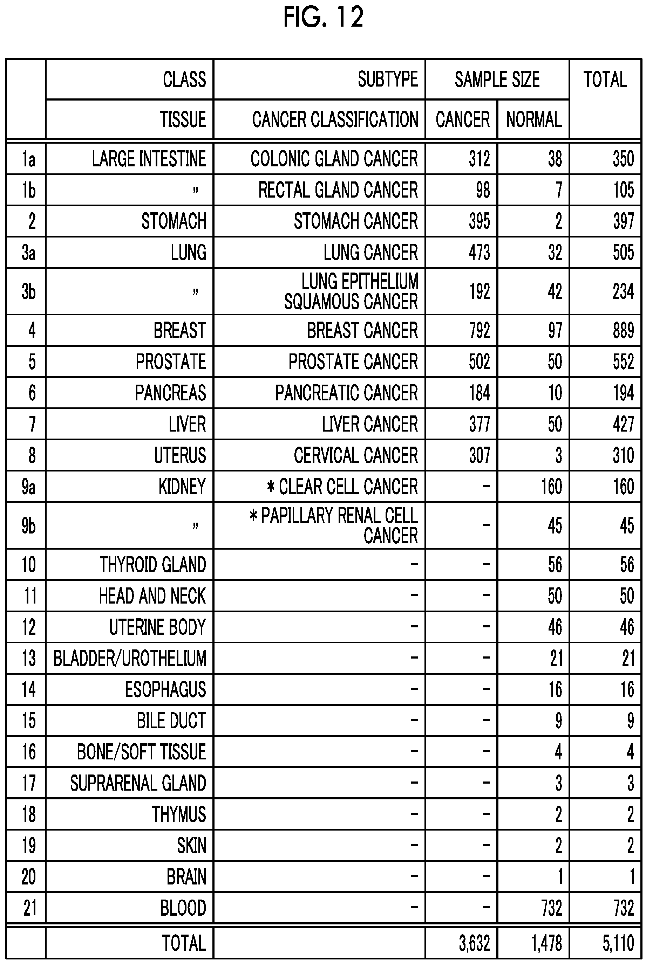

A total of 5,110 open data samples including the measurement values of the methylated site are collected assuming the discrimination of the extracted cell aggregates (living body tissue piece) by positioning as a feasibility study (Fig. 12).

For the cancer tumor and the normal organ (excluding blood), 4,378 samples are collected from the registered data of "The Cancer Genome Atlas" (TCGA) [Tomczak, Katarzyna, et al., 2015]. In addition, 732 samples of the blood are also collected [Johansson, Asa, Stefan Enroth, and Ulf Gyllensten, 2013].

All sample belonging classes (origin tissues including cancer and non-cancer distinction) are assigned in accordance with the registered annotation information.

In addition, the total number of methylated measurement values is 485,512 sites, but is 291,847 sites, excluding those for which all sample values cannot be measured (NA). It should be noted that, in the registered data described above, the data subjected to the post-processing, such as normalization, is used as it is.

Further, the entire data set is mechanically divided into equal parts, one data set is used as the learning data set and the other data set is used as a test data set.

The trial problems set in the present example are as follows.

i. About 5,000 samples of the data sets are prepared

Allocation class (32 in total): Cancer (8 types) or normal tissue (24 types)
Feature amount (methylated site): about 300,000 items

ii. From the above half of the learning data set, at maximum 10 to 300 items of methylated site (omics information, omics switch-like information) that can be used for the discrimination are selected in advance (and learning with parameter, such as subclass division or distribution parameter)
iii. Answer is made (one sample at a time) to the discrimination problem of the given sample (particularly from the other half of the test data set)

Input: selected methylated site measurement value of the sample (at maximum 300 items corresponding to the selection in ii)
Output: 9 types of estimated class = "cancer + origin tissue (select from 8 types)" or "non-cancer (only 1 type)" are selected

It should be noted that, in the example, the following method is adopted as a related-art method to be compared with a proposal method (method according to the embodiment of the present invention).

· Feature selection method: shannon entropy criteria with methylated site research cases [Kadota, Koji, et al., 2006; Zhang, Yan, et al., 2011] -Multi-class classification: naive bayes classifier (simple but known for its high performance [Zhang, Harry, 2004])

<5.1 Comparison Result between Proposal Method and Related-Art Method>

<5.1.1 Discrimination Accuracy of Test Data>

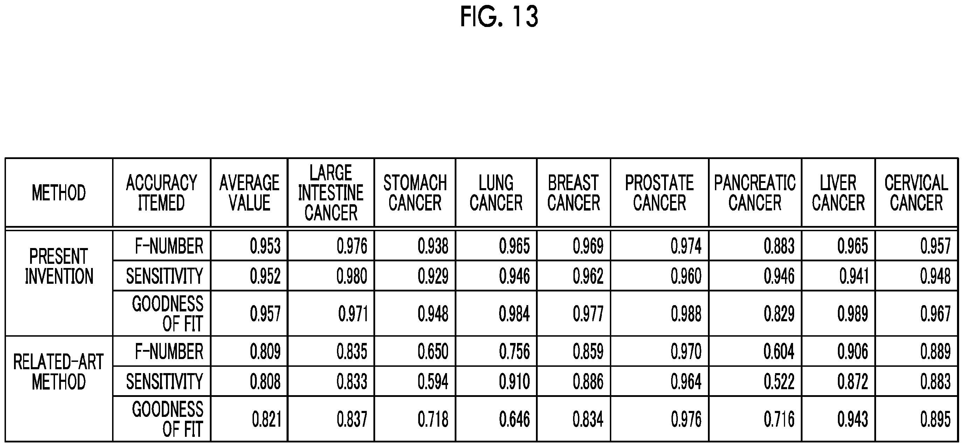

Learning with the learning data is performed, 277 sites (omics information, omics switch-like information) are selected, the discrimination accuracy of the test data is confirmed, and the proposal method (multi-class classification method according to the embodiment of the present invention) is compared with the related-art method (Fig. 13). As a result, it is shown that the proposal method has high discrimination accuracy in all items.

The average F-number of the related-art method is 0.809, while the average F-number of the proposal method reaches 0.953. In addition, in the related-art method, some lung cancer, pancreatic cancer, stomach cancer, and the like have an F-number/sensitivity/goodness of fit of less than 0.8, but the proposal method achieves 0.8 or more in all items.

<5.1.2 Robustness of Discrimination>

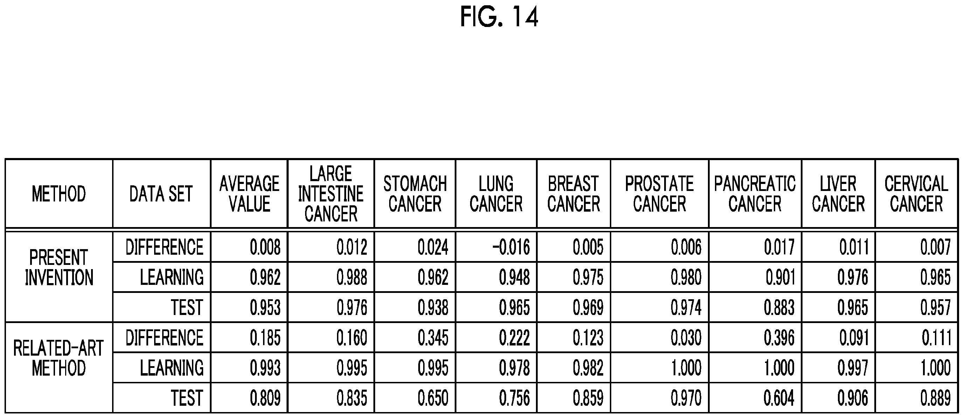

The robustness of the discrimination is confirmed by the average F-number difference between the learning and the test in the previous term, and the proposal method is compared with the related-art method (Fig. 14). As a result, it is shown that the robustness of the proposal method is excellent (reduction of the F-number is 0.008).

It can be seen that the related-art method shows an almost perfect average F-number of 0.993 for the learning data, and the accuracy of the test data is greatly reduced (difference 0.185), resulting in over-learning.

On the other hand, in the proposal method, the reduction in the average F-number is only 0.008. In addition, the discrimination ability of the pancreatic cancer has a relatively low value (F-number 0.883) within the proposal method, but also has a relatively low value (0.901) during learning. This proposal method suggests that the discrimination accuracy and tendency in the test data can be predicted to some extent at a stage of learning completion.

<5.1.3 Relationship between Number of Selected Features and Discrimination Accuracy>

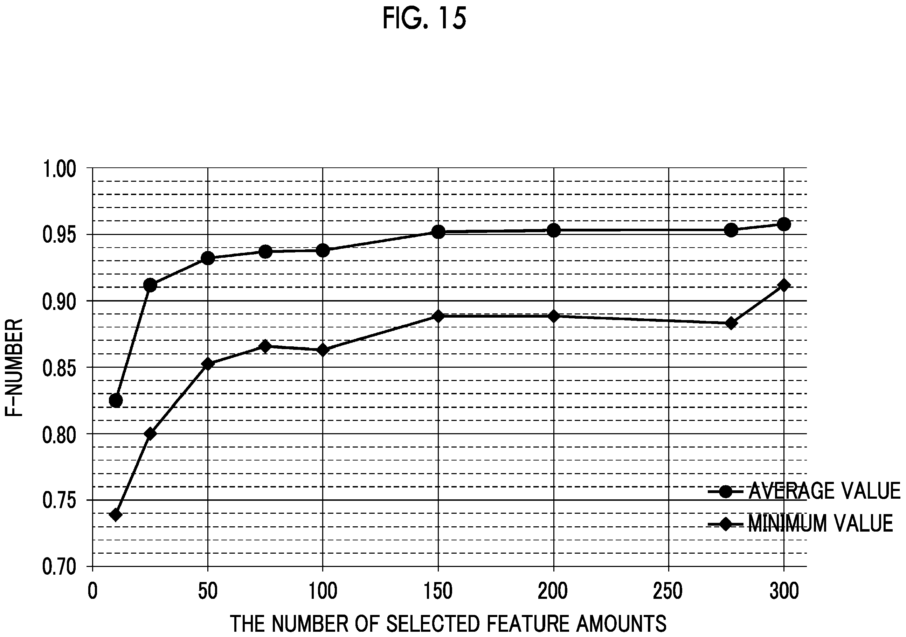

The relationship between the number of the selected feature amounts and the discrimination accuracy (F-number) is confirmed (Fig. 15). As a result, it can be seen that the discrimination accuracy is remarkably improved in a case in which 50 to 100 pieces are selected, and tends to be saturated in a case in which 150 to 300 pieces are selected.

Therefore, it is shown that, in the cancer diagnosis problem to discriminate "whether it is cancer or non-cancer" and the origin tissue particularly from the methylated pattern of cfDNA, the discrimination ability is not sufficient with 10 feature amount selections, the multi-measurements of at least 25 to 100 items or more are required (therefore, in the multi-class classification problem with a large number of classes, the number of the feature amounts (selected feature amount groups) selected in the selection step (selection processing) is preferably 25 or more, more preferably 50 or more, and still more preferably 100 or more).

<5.1.4 Exclusion of Similar Feature Amount and Introduction of Discrimination unneeded Pairwise>

In the proposal method, the similar feature amounts are not selected (similarity evaluation step, similarity evaluation processing). In addition, discrimination unneeded pairwise is introduced.

There are a total of 291,847 effective methylated sites (feature amounts in the present problem), but among 291,847 effective methylated sites, 59,052 similar feature amounts (equivalence relationship, inclusion relationship) can be specified and reduced by excluding from the target (reduction by 20.2%). In addition, since the original 32 classes are divided into 89 classes by sample clustering, the total number of simple pairwise is 4,005. Of these, the non-target pairwise between 551 normal tissues and cancer subclasses can be reduced (reduction by 13.8%).

At the same time, the search space can be reduced by 31.2%. It can be confirmed that the efficiency of the discrimination switch combination search is improved by excluding the similar feature amounts and introducing the discrimination unneeded pairwise.

<5.1.5 Subclass Division>

In the proposal method, sample clustering is introduced to internally divide the given class into the subclasses. Since the combination with the discrimination unneeded pairwise is also important, the effect of both is confirmed.

For comparison, a trial is performed in which subclass division is not performed, discrimination unneeded pairwise of the feature selection is not introduced, and other procedures are the same. As a result, even in a case of being limited to the cancer tissue, the correct answer rate of the discrimination is reduced from the original 95.9% to 85.6% (since there are 24 types of the normal tissues without division, particularly to confirm the effect of the subclass division, the comparison is limited to the cancer tissue).

It can be confirmed that highly accurate discrimination is realized by introducing subclass division and discrimination unneeded pairwise.

<5.1.6 Combined Use of Final Tournament Match>

In the proposal method, in the multi-class classification, the brute force match ranking (in the present section, the first rank class is called the "qualifying top class") and the final tournament match are used in combination.

In the 2,555 test data, there are 278 cases in which the qualifying top class does not match the correct answer class. Among these, there are 162 cases that can be corrected to the correct discrimination by the final tournament match. On the other hand, there are 19 opposite cases (the qualifying top class matches the correct answer class, but it is changed to the wrong discrimination by the final tournament match).

That is, by using the final tournament match in combination, it is possible to correct 51.4% by subtracting the discrimination error of the qualifying top class, and improve the overall correct answer rate by 5.6%. The configuration can be confirmed in which the performance of the binary-class classifier is skillfully brought out by pairwise discrimination.

In the proposal method, the discrimination procedure, the comparative study class, and the dependent feature amount are clear. Therefore, it is possible to trace back the discrimination result and easily confirm and describe the difference with the feature amount or the threshold value which is the basis. It can be said that it is an "AI that can be described" that is particularly advantageous for application to medical diagnosis that requires a basis for the discrimination.

Fig. 16 is a table showing a shown example of a basis for the discrimination (extracted from the actual determination transition in the test data). The higher rank class and the result of the classification result and the score are shown in a portion (a) of Fig. 16. In the example of Fig. 16, it can be seen that the sample is classified into "cancer tissue 1" and its score is 79, and the next similar sample is "cancer tissue 3" and its score is 76.

In the same manner, each class score $R_i(s)$ can be confirmed in the 7 rows from the row of "cancer tissue 1" to the row of "normal tissue 1". In addition, each class pairwise discrimination score $r_j(s, t)$ can be confirmed in the three rows from the row "<cancer tissue 1|cancer tissue 3>" to the row "<cancer tissue 1|cancer tissue 5>".

In addition, in the table shown a portion (b) of Fig. 16, a list of "how the selected feature amount (described as the marker in the table) list contributes to each discrimination score" can be confirmed. Of course, in addition to the distribution map of the learning data as shown in Fig. 7A, visualization such as plotting the values of each sample on the figure may be added.

As described above, with the proposal method (the present invention), after the classification (selection), the processing steps are traced in the reverse order, and each score or the like is shown, so that the basis for the discrimination can be confirmed and visualized. As a result, the reliability degree of the final discrimination result can be estimated from the similar class score, the discrimination score, or the like of other candidates. In addition, specifying the feature amount that is the basis can be connected to the consideration after classification by its interpretation.

<Relationship between Number of Selected Feature Amounts and Minimum Cover Number>

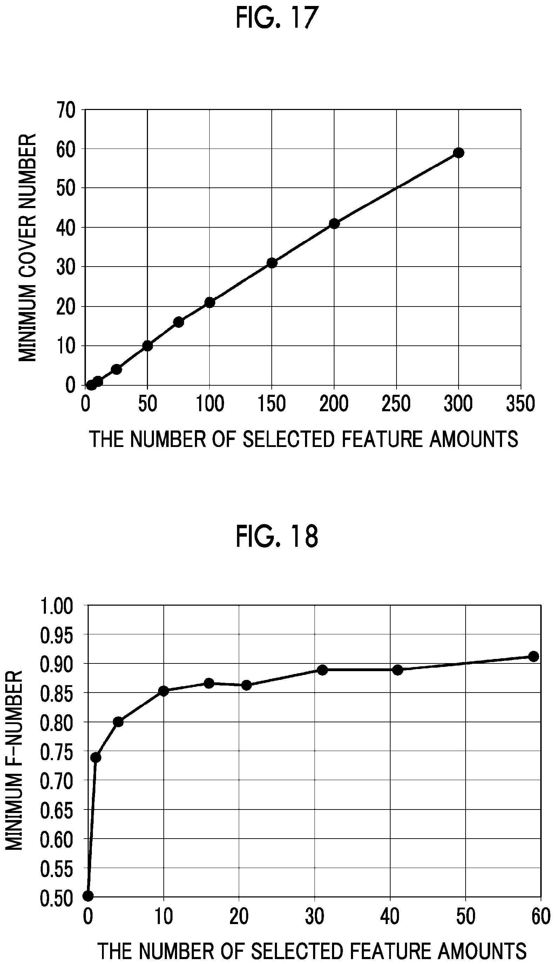

The relationship between the number of the selected feature amounts and the minimum cover number in the example described above is shown in a graph of Fig. 17.

$$(\min\{Z_f^{(k)}\}) \quad \cdots \quad (2\,0)$$

Here, a linear relationship with a slope of generally 1/5 is obtained, and it means that, for advanced multi-class classification problems such as cancer 8 classes/normal 24 classes, and with internal subclass division, the feature amount set that covers all the class discriminations can be selected for generally every five selections.

That is, the feature selection of the method according to the embodiment of the present invention is returned to the set cover problem, and it is shown that the effect of extension is great and the minimum cover number can be efficiently improved in the multi-class classification problem. In addition, it can be seen that, from Fig. 17, by finely adjusting the obtained feature amount set, the feature amount set that shows high discrimination ability with a small part of the total feature amounts, specifically, 5 times or less of the needed minimum cover number can be created, and the feature amount set that satisfies the minimum cover number with such a small number is greatly valuable.

<Relationship between Minimum Cover Number and Minimum F-Number>

The relationship between the minimum cover number in the selected feature amount set and the minimum F-number (the minimum value of the discrimination ability F-number in the test data in the discrimination target class) is shown in a graph of Fig. 18.

$$(\min\{Z_f^{(k)}\}) \quad \cdots \quad (2 1)$$

From this, it can be read that, in a case in which the minimum cover number is 0, almost no performance can be obtained, the minimum F-number becomes 0.8 at around 5, the minimum F-number becomes 0.85 at around 10, and 0.9 at around 60. That is, first, it can be seen that almost no performance can be obtained unless the feature amount set having the minimum cover number of at least 1 or more is selected. In addition, the detailed criteria for the F-number actually needed vary depending on the problem, but 0.80, 0.85, and 0.90 are easy-to-understand criteria, so it can be seen that the feature amount set having the minimum cover number of 5, 10, or 60 or more is valuable. In addition to the previous term (relationship between the number of the selected feature amounts and the minimum cover number), "achieving the cover number by a relatively small number of the selected feature amounts (5 times or less of the presented minimum cover number)", which can be realized by the present invention, is particularly valuable.

It should be noted that the example about "methylated site and living body tissue classification" described above is merely one of specific examples. The method according to the embodiment of the present invention is sufficiently generalized and can be applied to any feature amount selection and multi-class classification outside the field of biotechnology. For example, in a case of performing the class classification of people in the image (for example, Asia, Oceania, North America, South America, Eastern Europe, Western Europe, Middle East, and Africa), the feature amount can be selected by the method according to the embodiment of the present invention from a large number of the feature amounts, such as the size and shape of the face, skin color, hair color, and/or the position, the size, and the shape of the eyes, nose, and mouth, and the multi-class classification can be performed by using the selected feature amount. In addition, the method according to the embodiment of the present invention may be applied to the feature amount selection and the class classification of agricultural, forestry and fishery products, industrial products, or various statistical data.

<Second Embodiment>

Hereinafter, a second embodiment of the present invention will be described. In the second embodiment, the multi-class classification assuming various problems of the liquid biopsy with respect to the first embodiment described above is further performed.

<Multi-Class Classification Assuming Various Problems of Liquid Biopsy>

The present invention can be applied to various actual problems, one important application expansion example includes a liquid biopsy, that is, an examination for determining the presence or absence of cancer-derived cell free DNA (cfDNA): ctDNA in collected blood. That is, it is needed to assume that a measurement target sample is a mixture of a detection target specimen and another specimen, and the concentration of the detection target specimen is low.

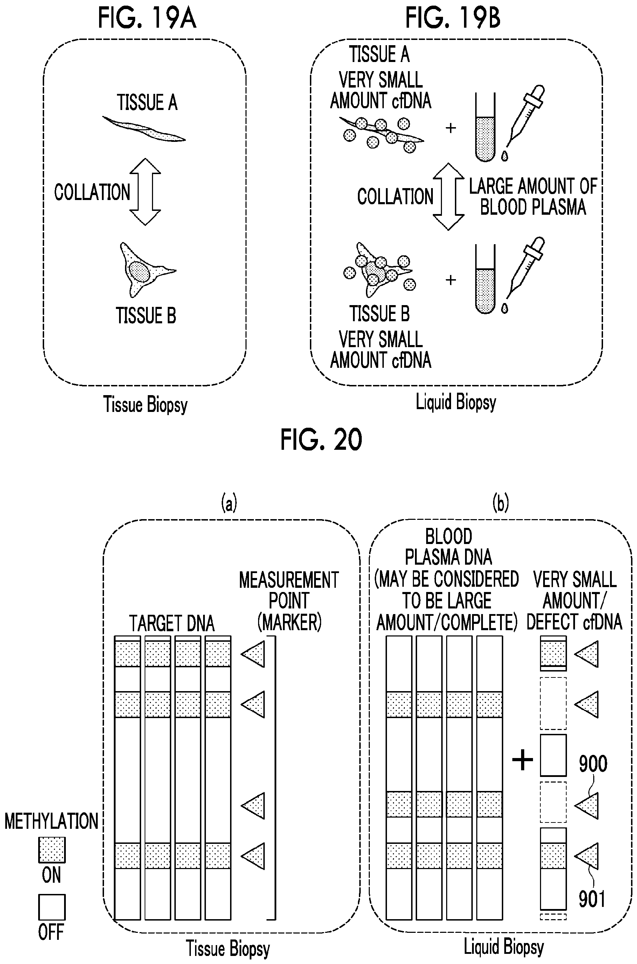

Therefore, in the premise that "the sample is derived from only one single class", that is, in the premise that "a tissue biopsy for the liquid biopsy, that is, a discrimination target tissue cell can be collected in an almost pure form", even in a case in which the cancer-derived cfDNA is present.there are problems of (1) ctDNA is mixed with a large amount of background blood plasma and (2) ctDNA is fragmented and has a very small amount. Fig. 19A is a diagram for a tissue biopsy, and Fig. 19B is a diagram for the liquid biopsy. That is, in a case of performing the multi-class classification in the liquid biopsy, it is needed to assume that "not all the feature amounts can be measured in the same manner as in a case of the tissue biopsy".

Fig. 20 is a diagram for describing a problem regarding the feature amount selection and the multi-class classification in a case of the liquid biopsy, in Fig. 20, the up-down direction indicates the arrange of sites (feature amounts) and a portion (methylated ON site) indicated by a triangle is a measurement point. A portion (a) of Fig. 20 shows a state in the tissue biopsy, and a portion (b) of Fig. 20 shows a state in the liquid biopsy. In a case of the liquid biopsy, there is a case in which the feature amount is defective as at the measurement point 900 and it is mistakenly recognized as "no signal", or a case in which the feature amount overlaps the blood plasma as at the measurement point 901 and the signal cannot be discriminated.

Therefore, a method of correctly realizing the multi-class classification is required even in cases of each of (1) a case in which a part of the feature amount is defective and (2) a case in which the value of the feature amount overlaps blood plasma as shown in Fig. 20. Then, such an application is not limited to the detection of cancer in blood, and various applications can be considered.

The inventors of the present application have studied diligently in consideration of such circumstances, and have obtained an idea for the second embodiment of the present invention. That is, the inventors of the present application configure the feature amount selection method of listing the feature amounts functioning like a switch that contributes to the robust discrimination and being based on a combination search that sufficiently covers the pairwise discrimination of the needed classes, further, a method in which the multi-class classification is correctly realized further in cases of each of (1) the case in which a part of the feature amount is defective and (2) the case in which the value of the feature amount overlaps blood plasma based on the method of configuring a multi-class classifier from a simple binary classifier in combination with a tournament hierarchy method by only using a robust discrimination portion among the selected sites (selected feature amounts). As a result, the second embodiment of the present invention can be applied to the multi-class classification involving the feature amount selection incorporating various characteristics, which is close to actual problems. Actually, the second embodiment can be applied to the multi-class classification assuming various problems of the liquid biopsy, for example, as seen in the cancer diagnosis described below. The feature amount selection method, the multi-class classification method, and the feature amount set proposed by the inventors of the present application are extremely useful in industry.

According to a second embodiment of the present invention, in a case in which the detection target specimen is mixed with another specimen, even in a case in which a part of the feature amounts is defective from the detection target specimen or is mixed with the feature amount of the other specimen, in particular, a sample having a huge number of feature amounts can be robustly and highly accurately classified into any of a plurality of classes, particularly, many classes based on a value of a small part of the selected feature amount. For example, specifically, in a case in which it is desired to discriminate the origin of a sample living body tissue piece, in cases in which

(1) it is desired to discriminate whether or not a biological specimen is cancer and which organ the biological specimen belongs to,
(2) the biological specimen is mixed with blood, and it is desired to detect the presence or absence of the specimen by blood measurement, and
(3) an amount of the biological specimen is not always sufficient, and the biological specimen may be partial defective, it is possible to provide a method of the multi-class classification involving the feature amount selection according to the second embodiment. It should be noted that, as a specific example will be described below, an application range of the present invention is not limited to a case in which the biological specimen is a target, and the present invention can be generally applied to a case in which the feature amount may be defective in the multi-class classification.

<Configuration of Multi-Class Classification Device>

Also in the second embodiment, each processing of the feature amount selection method (feature amount selection program) and the multi-class classification method (multi-class classification program) can be executed by the multi-class classification device 10 (for a specific configuration, see Figs. 2, 3 and the like and related descriptions) as in the first embodiment. In a case of the execution, the user can perform needed operation (an operation of setting the target value of a misclassification probability, an operation of setting a misclassification evaluation parameter, an execution instruction, or the like) via the operation unit 400, and the multi-class classification device 10 executes the feature amount selection and the multi-class classification method in response to the operation of the user or by automatically setting a condition (target value setting step or the like). It should be noted that the multi-class classification device 10 can designate one or more base classes from the N classes in advance in a separate frame (base class designation step and base class designation processing). The multi-class classification device 10 may designate the base class based on the operation of the user, or may automatically designate the base class without the operation of the user.

<1. Extension Method of Multi-Class Classification>

The details of the second embodiment will be described from here on the premise of the basic method described above. Therefore, in the following, the problems described for the first embodiment will be generalized, and a sample in which the detection target specimen is mixed with a large amount of specimens of the base class is assumed. It should be noted that, in the following description, the selected feature amount may be described as a "marker".

<Correction of Score by Weighting>

In a case of calculating the pair score for the pairwise described above, a combination of the base class and any target class is particularly focused. For example, in totaling the pairwise {A,O} totalization, a method of selecting a subset for which a discrimination flag is valid is the same as the basic method, and the value of the sample feature amount need only be modified to determine whether it is a pure base class or a mixture of the base class and the target class.

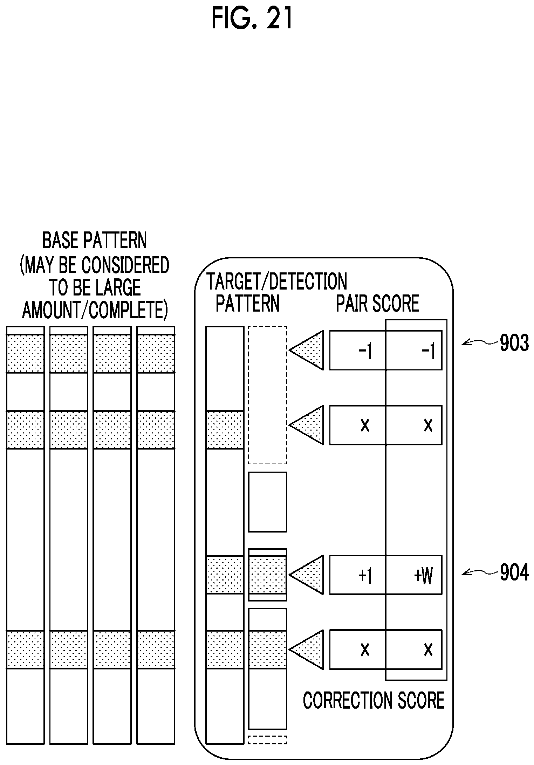

However, further, there is a possibility that the specimen derived from the target is defective, that is, there is a possibility that "even in a case in which the target specimen is mixed and is expected to be classified as the target class, only the value of the base pattern is detected for a part of the feature amounts". In such a case, since the defective portion is, so to speak, "lose by default", the score (for example, a negative value) on the base pattern side tends to be dominant. This situation is shown at the measurement point 903 (measurement point in which the feature amount of the target is defective) in Fig. 21. Therefore, in anticipation of defect, the score is corrected by giving the weight to a target match marker different from the base (performing weighting of the feature amount such that a case in which the discrimination result of the multi-class classification is the target class (first class) is increased; first evaluation step and first evaluation processing), so that the target can be correctly detected even in a case in which there is a defect (see the eighth, ninth, and seventeenth to twentieth aspects of the present invention). This situation is shown at the measurement point 904 (correction score +W is given) in Fig. 21.

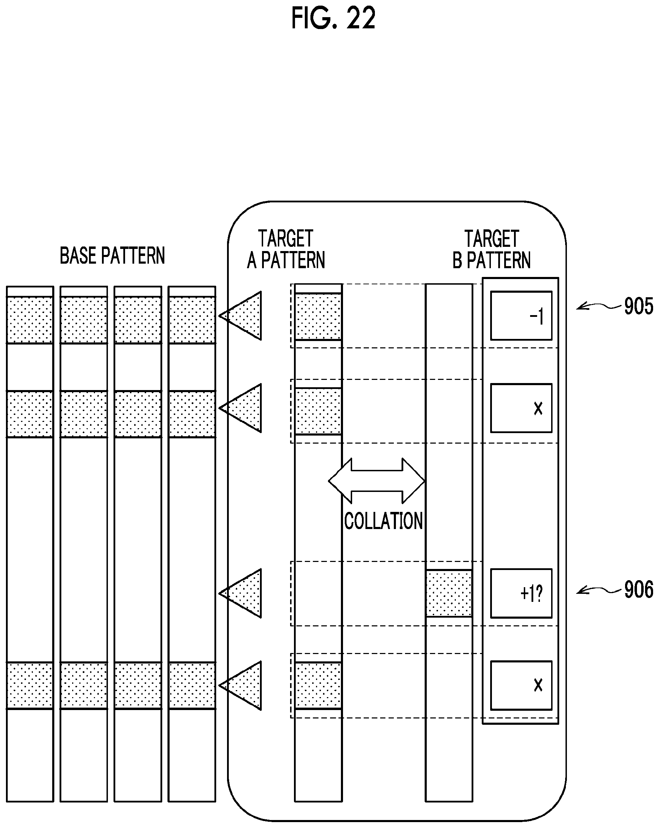

Further, in the above description, the combination of the base class and any target class is focused, but it is desirable to focus on the pairwise between any target classes which are non-base classes (correct the score). The above is because, in a case in which a target A is close to the base pattern (left side in Fig. 22) in a comparison marker of the target A (second class) to a target B (third class) as at the measurement point 905 in Fig. 22, the target A tends to be superior to the target B in a case in which the correction of the score is not performed, as at the measurement point 906. That is, even in a case of determining "which target-derived specimen is mixed", a circumstance that "a value close to the base class is likely to be measured as the feature amount" is not changed.

Therefore, even in a pairwise comparison between non-base classes, it is desirable to compare the measurement value with the value of the feature amount of the base class (reference step and reference processing), and to correct the score by giving the weight and enable the correct detection even between the target classes with defects in the case of a value distant from the base (see the eleventh aspect of the present invention). Specifically, as a result of the reference, for the target A (second class), in a case in which there is a discrimination possibility of the pairwise {A,O} between the target A and the base class O and the value of the feature amount is close to the target A, the weighting is performed such that a case in which the discrimination result of the binary-class classification step is the target A is increased (second evaluation step and second evaluation processing). Similarly, for the target B (third class), in a case in which there is a discrimination possibility of the pairwise {B,O} between the target B and the base class O and the value of the feature amount is close to the target B, the weighting is performed such that a case in which the discrimination result of the binary-class classification step is the target B is increased (third evaluation step and third evaluation processing). It should be noted that this correction amount may be set by the same procedure as described below or different correction amounts may be set in consideration of the pattern distances of both the target class and the base class.

<Decision Method of Correction Amount>

Next, an embodiment of a decision method of a specific correction amount will be described. As the performance index of the multi-class classification, for example, sensitivity and goodness of fit can be given (of course, another index such as F-number or specificity may be used, but the following gist can be similarly applied). That is, in a case in which the detection of the target is the purpose, (1) discriminating the sample from the target class-derived sample in a case in which the given sample is actually the target class-derived sample (in a case in which such a specimen is mixed) (evaluating a second misclassification probability that is a probability in which the sample which is a probability in which the sample, which originally belongs to the class different from the base class, is misclassified into the base class, and decreasing the second misclassification probability; second probability evaluation step and second probability evaluation processing), and (2) discriminating the sample from the target-derived sample in a case in which the target class-derived specimen is mixed in the given sample (that is, evaluating a first misclassification probability that is a probability in which the sample which is a probability in which the sample, which originally belongs to the base class, is misclassified into any different class other than the base class by the weighting, and decreasing the first misclassification probability; first probability evaluation step and first probability evaluation processing) are important.

Here, in a case in which the weighting of the correction is increased, the accuracy of (1) is increased, whereas the accuracy of (2) is decreased (the sensitivity of the target detection is increased, but the goodness of fit is decreased). On the contrary, in a case in which the weighting of the correction is decreased, the accuracy of (1) is decreased, whereas the accuracy of (2) is increased. Therefore, it is desirable to set any performance target (target value setting step and target value setting processing) and to adjust the weighting such that the accuracy of (1) and (2) of the weighting falls within the set performance target or the deviation amount is minimized (weighting adjustment step and weighting adjustment processing). Then, it is desirable to configure the multi-class classifier from the binary class classifier by these steps (configuration step and configuration processing) and to perform multi-class classification by using the multi-class classifier (see the twelfth aspect of the present invention).

It should be noted that any of the sensitivity, the goodness of fit, the specificity, the F-number, and the like described above may be used as the performance target, and the performance target may be common to all classes, may be different between the base class and the target class group, or may be different between the base class and each type of plurality of target classes (each of N classes).

Here, in a case in which an appropriate correction amount cannot be set due to the intersecting ranges of (1) and (2) (absence of the correction amount that satisfies both (1) and (2)) or the set correction amount that is determined separately, it is predicted that the target cannot be achieved even in a case in which the correction is made valid, so that it is particularly desirable to able to issue a warning to the user (first warning step and first warning processing; see the sixteenth aspect of the present invention). Also, in a case in which the lower limit of the correction amount is W = 1 or less, it is predicted that the correction is unneeded (it is predicted that the performance target is achievable even in a case in which the correction by the weighting is not performed), the user may be notified of that effect (second warning step and second warning processing; see the sixteenth aspect of the present invention).

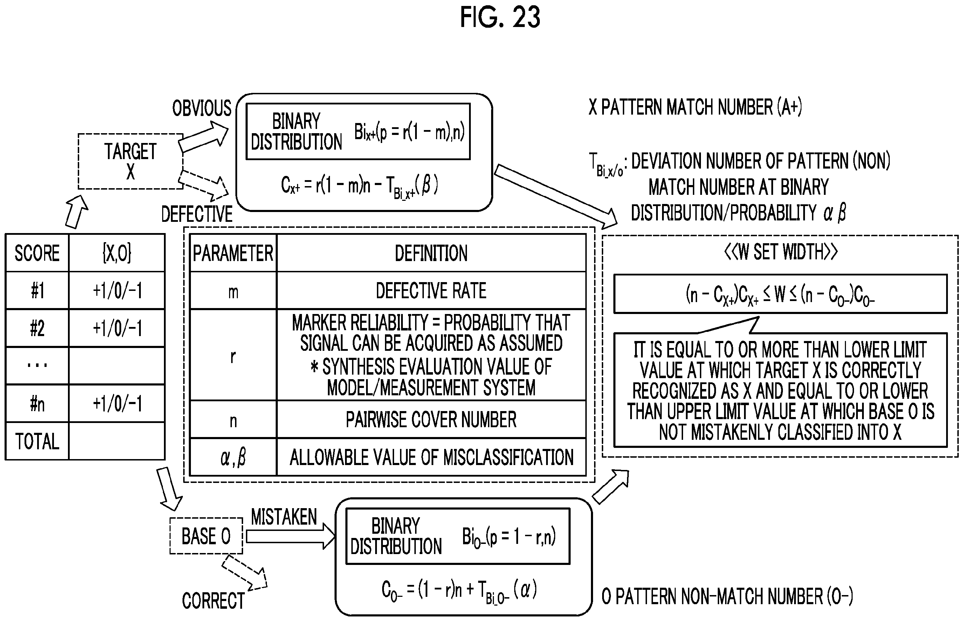

Further specific embodiments will be described as such an adjustment method. In a case in which the defect is modeled as a uniform extraction, as shown in Fig. 23, based on the marker reliability r, the defective rate m, the pairwise cover number n, and the target performance $\alpha/\beta$ (target values of first misclassification probability and second misclassification probability), a settable width (weighting range) of the weighting W can be calculated by using the binomial distribution (weighting setting step and weighting setting processing). Here, a part or all of the marker reliability r, the defective rate m, the pairwise cover number n, and the target performance $\alpha/\beta$ can be set as the misclassification evaluation parameter (evaluation parameter setting step and evaluation parameter setting processing). The multi-class classification device 10 may set the misclassification evaluation parameter in response to the operation of the user via the operation unit 400, or the multi-class classification device 10 may automatically set the misclassification evaluation parameter. In addition, the multi-class classification device 10 configures the multi-class classifier from the binary class classifier by these steps (configuration step and configuration processing) and performs the multi-class classification by using the multi-class classifier (see the thirteenth aspect of the present invention).

That is, the number co- in which signals mistakenly determined to be non-base is measured from the base sample in which true belonging class is the base follows the binomial distribution Bi(p = 1 - r, n) (that is, it corresponds to the number of trials established in a case in which the trials established with the probability 1 - r are performed n times independently). Similarly, the number cx+ in which the signal correctly determined to be the target is measured from the sample in which the target specimen is truly mixed in the specimen follows the binomial distribution Bi(p = r(1 - m), n). In this case, the weighting correction amount W corresponding to the (1) described above is as in Expression (22), and the weighting correction amount W corresponding to the (2) described above is as in Expression (23).

$$W \geq \left( n - cx^{+} \right) / cx^{+} \qquad \cdots \text{Expression} \ \left( 2\ 2 \right)$$

$$W \leq \left( n - co^{-} \right) / co^{-} \qquad \cdots \text{Expression} \ \left( 2\ 3 \right)$$

That is, it is possible to set the upper limit and the lower limit (weighting range) of the correction amount by calculating the correction amount that corresponds exactly to the (1) and (2) described above (weighting adjustment step and weighting adjustment processing).

It should be noted that, as described above, in a case of corresponding to uniform extraction, it is desirable to use a binomial distribution for a probability distribution, but the binomial distribution does not always have to be used. For example, a normal distribution that approximates the binomial distribution may be used, and an appropriate probability distribution corresponding to the model may be used in a case where a defect that is not a uniform extraction is assumed.

<Decision of Weighting by Learning>

The weighting of the correction may be decided by learning. For example, a correction amount calculation parameter (misclassification evaluation parameter) can be learned from the learning data set (first learning data set) (see the fourteenth aspect of the present invention). Here, the marker reliability may be divided into the target and the base, for example, in correspondence to $\alpha/\beta$. (1) The target marker reliability rx can be set as rx in which the defective rate m at which the target detection sensitivity is 1 - $\beta$ is searched without the correction (correction amount W = 0) and the correction amount W is set to 1 by m. (2) The base marker reliability r0 can be set as r0 corresponding to the search for the correction amount W in which the base detection sensitivity is 1 - $\alpha$ without the defect (defective rate m = 0). Of course, the learning method is not limited to this, and here, the target marker reliability and the base marker reliability are introduced in correspondence to (1) and (2), but the marker reliability may further be calculated for each target class to decide each correction amount.

Alternatively, the correction amount itself can be decided by learning. That is, by setting some plurality of correction amounts, actually attempting the multi-class classification of the learning data set (second learning data set), and confirming the performances of (1) and (2), the correction amount may be selected such that the best performance is obtained (performance of the multi-class classification is improved) (see the fifteenth aspect of the present invention). As a method of searching for the correction amount, various methods, such as a grid search and a dichotomy search, can be applied. It should be noted that, in a case in which the classes (discrimination unneeded class group) that do not need to be discriminated from the base class are present, in a case in which the discrimination possibility determination for the pairwise is omitted (exclusion step and exclusion processing of excluding the pairwise coupling of the marked discrimination unneeded class groups from the pairwise couplings to be expanded), the classes are handled as the base class, and the same correction as in each of the above cases can be applied (see the tenth aspect of the present invention).

<Extension Method of Feature Amount Selection: Balance Selection>

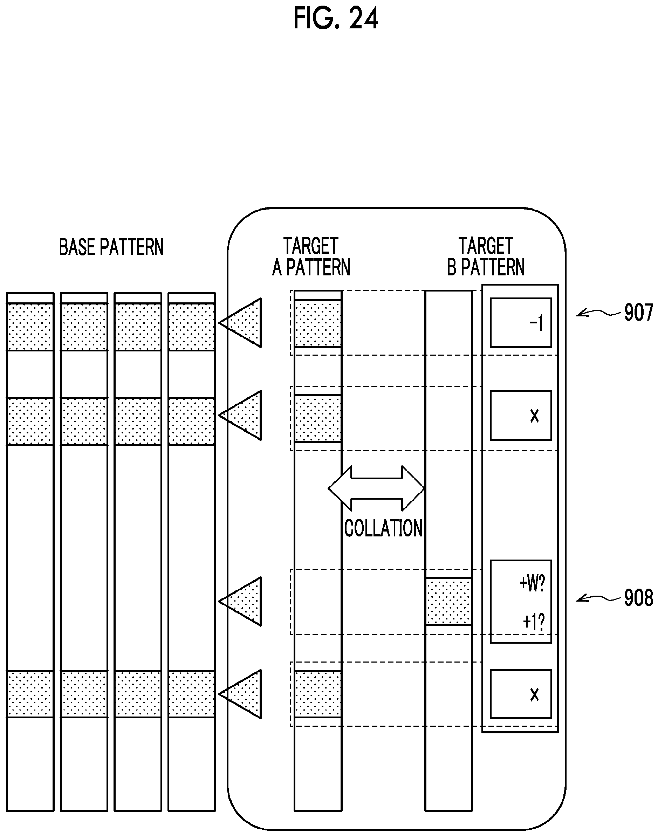

The discrimination between the target classes of the non-base classes has been described in relation to the seventh aspect of the present invention, and a method of balancing by the feature amount selection will be further described. In a case in which the match with the base pattern in the comparison marker between the target A and the target B is biased to one target (target A in a case in Fig. 24) as at the measurement point 907 in Fig. 24, the target B tends to be superior to the target A in a case of "with the correction" as at the measurement point 908 in Fig. 24, and the target A tends to be superior to the target B in a case of "without the correction". That is, a target that is likely to be discriminated and a target that is not likely to be discriminated are divided according to the bias. That is, even in a case of determining which target-derived specimen is mixed, the circumstance that "a value close to the base class is likely to be measured as the feature amount" is not changed, and the target close to the base is likely to be detected in a case in which the correction is not performed, on the contrary, the target far from the base class is likely to be detected in a case in which the same correction as described above is applied. Therefore, it is desirable to select the feature amount such that any target class is positioned at the same distance from the base class in the feature amount space.

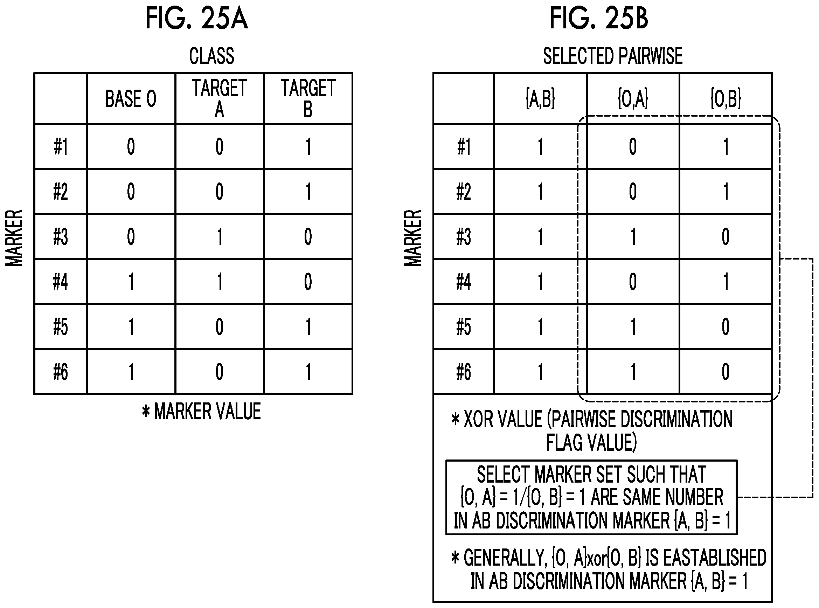

Specifically, as shown in Figs. 25A and 25B (Fig. 25A shows the marker value of each class and Fig. 25B shows the discrimination flag value of the selection pairwise), in a case in which the marker that discriminates any pairwise {A,B} is selected, the discrimination possibility of the pairwise {O,A} and {O,B} with the base class (there is no discrimination possibility in a case in which the discrimination flag is 0, and there is discrimination possibility in a case in which the discrimination flag is 1) is referred to, and the marker set (feature amount group and feature amount set) in which the number of discrimination flags is the same in all pairwise as much possible (in the example shown in Figs. 25A and 25B, there are three markers each of which the discrimination flag value is 1 in pairwise {O,A} and {O,B}) need only be selected (totalization step, totalization processing, and selecting a combination of the feature amount groups for which the balance degree of the totalization result is evaluated; see the first aspect of the present invention). Such a selection is particularly effective in a case in which the correction is valid, but the selection is considered to be effective even in a case in which the correction is not valid because the influence of the pairwise defect between the non-base classes is balanced.

It should be noted that, in a case in which there is the classes that do not need to be discriminated from the base class are present (first marking step and first marking processing of marking a part of the given classes as the first discrimination unneeded class groups that do not need to be discriminated from each other), in a case in which the discrimination possibility determination for the pairwise is omitted (first exclusion step and first exclusion processing of excluding the pairwise coupling of the marked first discrimination unneeded class groups from pairwise couplings to be expanded), the classes can be handled as the base class and excluded from the target of the consideration of balance (see the third aspect of the present invention). Specifically, it is necessary to balance the pairwise {O, X} and the pairwise {O, N} for the base class O or any class X (for example, cancer) other than the class N that does not need to be discriminated from the base class.

Further, in a case in which the feature amount group selected in this manner and capable of discriminating the pairwise of any two classes is quantified with reference to the data set, the marker set (feature amount set) itself in which, in all the pairwise couplings, for any pairwise coupling {A, B} that is marked to be discriminable by at least one feature amount and does not include each base class, for the feature amount having the discrimination possibility quantified in (3) described above, two discrimination possibilities of the pairwise {O, A} and {O, B} of each class {A, B} and each base class {O} in the pairwise are balanced (difference is minimized) is one of the embodiments of the present invention (see the twenty-first aspect of the present invention). The multi-class classification device 10 performs the multi-class classification (multi-class classification method according to the embodiment of the present invention) using this marker set.

Further, in a case in which a plurality of base classes are set, a feature amount having a close distribution in all of the plurality of base classes may be selected from the given feature amounts, and the feature amount may be selected in the same manner thereafter by limiting to that (see limitation step and limitation processing of limiting a selection target of the feature amount group to a feature amount having no discrimination possibility between all the designated base classes; see the second aspect of the present invention). For example, in a case in which the detection of the cancer is the purpose, in a case in which there is a possibility that the liver tissue leaks into blood because there is the determination that a person already suffers from liver damage or the like in addition to cancer or a possibility thereof, it is possible to perform appropriate feature amount selection and multi-class classification by such a feature amount selection without being influenced by the possibility. It should be noted that "there is no discrimination possibility between the base classes" means "feature amount in which the pairwise discrimination flag value $\{O_1, O_2\}$ is 0 for the base classes $O_1$ and $O_2$", and in the aspects described above, the selection target is limited to such a feature amount.

<Example>

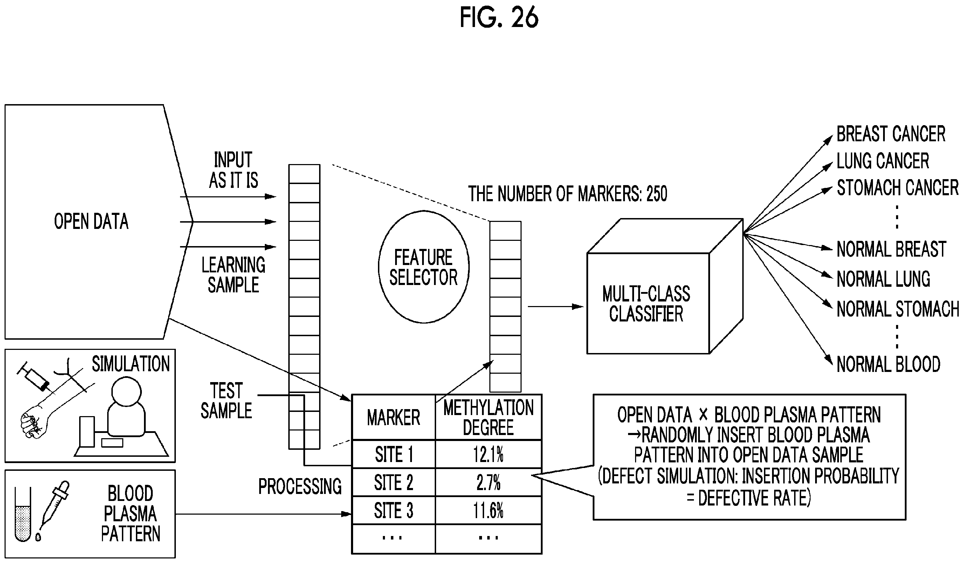

The study for the second embodiment is also performed using the same open data as the first embodiment described above. Therefore, the multi-class classification involving the feature amount selection for the purpose of the cancer detection is described. Fig. 26 is a diagram showing a test environment in the example. First, in a learning phase, the gene DNA methylation data of the tissue collection is input as it is. It should be noted that, in the test phase, a blood plasma pattern value is randomly inserted into the sample value with the probability of the defective rate m for each feature amount of the sample data. Here, the number of selected feature amounts (number of markers) is set to 250.

<Effect of Weighting Correction>

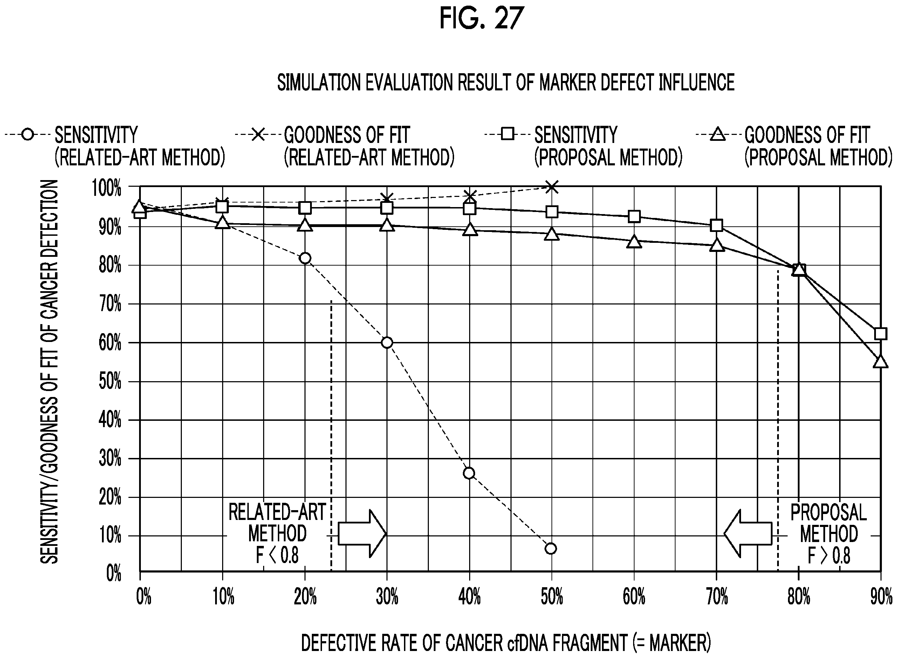

First, the effect of the weighting correction will be described. Fig. 27 is a diagram in which the defective rate is plotted on the horizontal axis, the sensitivity/goodness of fit of the cancer detection are plotted on the vertical axis, and the related-art method (a case of without the correction) is compared with the proposal method (a case of with the correction according to the embodiment of the present invention). The target is sensitivity (= goodness of fit) = 80% common to all classes. In the related-art method, the target cannot be maintained at the defective rate of 20 to 25% or more, whereas an effect that "the target can be maintained up to the defective rate of about 75 to 80%" is shown by appropriate weighting correction in the present invention.

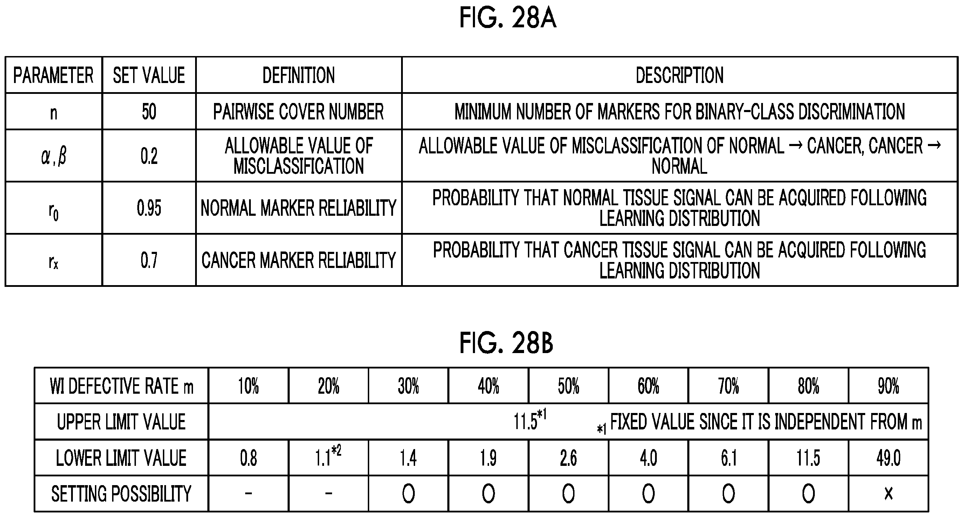

It should be noted that, in the example, an allowable value of the misclassification is set to 20% and the pairwise cover number is set to 50 as described above, two distinctions are further made between the cancer marker reliability and the normal marker reliability, the parameters are learned from the learning data according to the method disclosed in the embodiment of the present invention, and then an appropriate correction amount is decided, and the correction amount is set at an intermediate value between the upper limit and the lower limit. Fig. 28A is a table showing the set value of the parameter and Fig. 28B is a table showing the upper limit and the lower limit of the correction amount. In this way, for example, in a case in which the defective rate of 90% is set, since the upper limit value < the lower limit value, it is possible to issue a warning to the user that an appropriate correction cannot be performed (first warning step and first warning processing). Moreover, actually, at 90%, a result shows a large deviation from the target performance. In addition, in a case in which the defective rate is 20 or less, the correction does not always have to be valid, and the user can be notified (of the effect that the performance target is predicted to be achievable without performing the correction by the weighting) as described above (second warning step and second warning processing). Moreover, actually, up to about 20%, it is shown that a result generally falls within the range of the target performance.

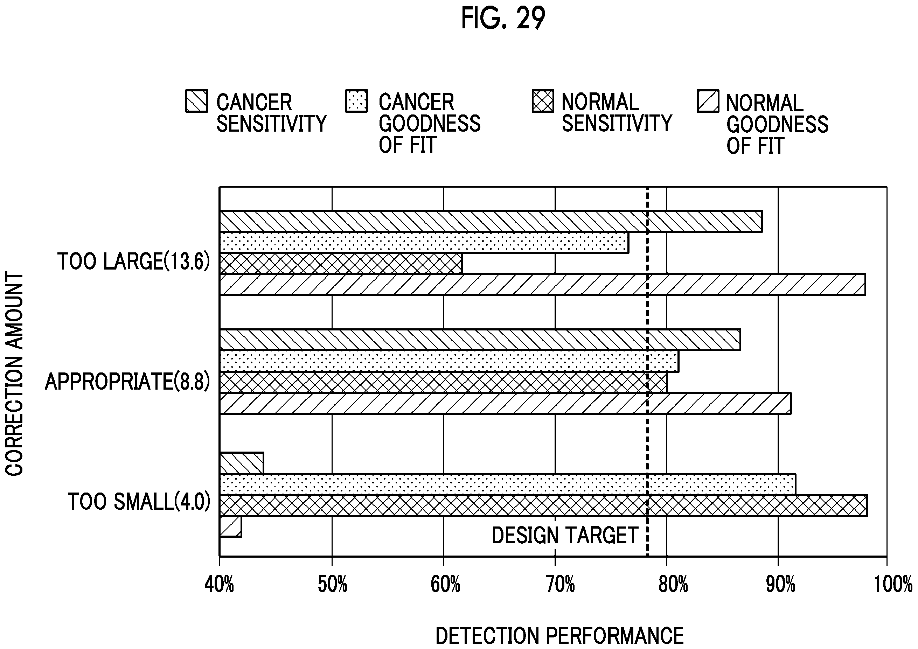

Next, the learning suitability of the weighting correction amount will be described. Fig. 29 is a diagram in which the sensitivity/goodness of fit of the cancer/normal tissue detection are plotted on the horizontal axis at setting of defective rate of 70% and each performance of the correction amounts of three patterns arranged on the vertical axis is shown. Accordingly, for example, it is shown that classification is attempted by three stages of weighting correction amounts (4.0, 8.8, 13.6), and the best correction amount (8.8) can be selected among them, so that the design target can be achieved.

<Effect of Balance Selection of Feature Amount>

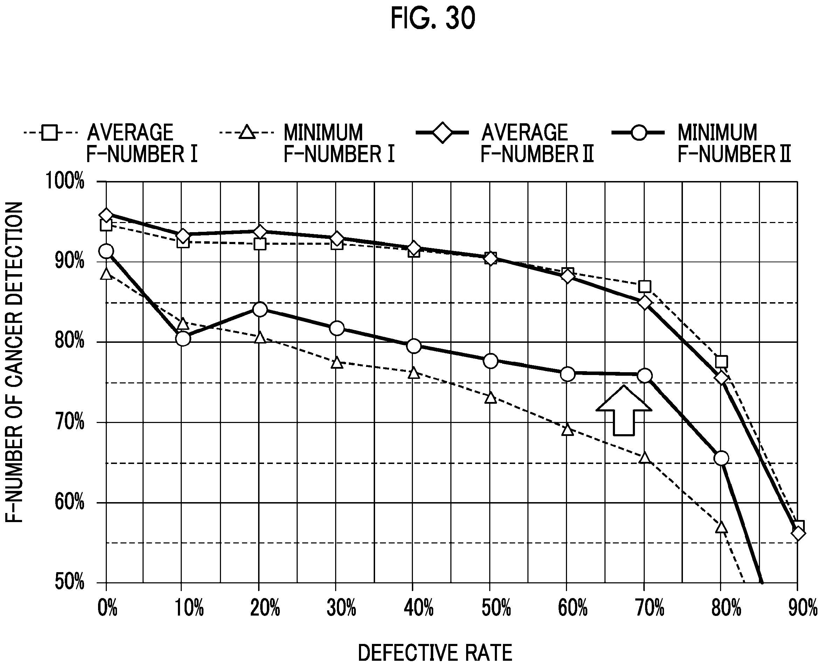

Further, the effect of the balance selection of the feature amount will be described. Fig. 30 is a diagram in which the defective rate is plotted on the horizontal axis, the minimum value/average value of the F-number (harmonic average of sensitivity and goodness of fit) of cancer detection are plotted on the vertical axis and the proposal method I (in a case of with the correction and without the balance selection) is compared with the proposal method II (in a case of with the correction and with the balance selection). An effect of increasing the minimum F-number while the average F-number is almost not changed by the feature amount balance selection proposed in the present invention (for example, generally 0.65 → 0.75 in a case in which the defective rate is 70%) is shown.

<Other Application Examples of Second Embodiment>

It is needless to say that the second embodiment of the present invention can be widely applied to a case in which the feature amount can be defective by the multi-class classification, in addition to a case of cfDNA. For example, in a case of classifying the assumed classes (various types of customer types or the like) of a customer (questionnaire respondent) from questionnaires, such as postcards, telephone calls, interviews, and the Internet, depending on the questionnaire, it is not required to response, or it is assumed that there is no response item because there is no response, and thus the defect may be assumed in that case. In this case, as described in the embodiments, the setting of the defective rate may be changed for each response item. In particular, it is highly suitable for the problem in which the questionnaire results are totalized in advance for each group, it is determined from the totalization whether or not the respondent having a different classification image is mixed in the group, and the classification image of the respondent is specified. Alternatively, for example, in a case of classifying the assumed classes (type of animal, type of product, or presence or absence of defect) of the subject from the image, such as a picture, it is assumed that a part of the image is defective due to the imaging condition or an obstacle, such as reflection of the flash and hands. In particular, it is highly suitable for the problem in which the subject to be detected is transferred to another subject or a background image. The same applies to the sound in addition to the image. The second embodiment is not particularly limited to cfDNA, and it is clear that the second embodiment can be generally applied to cases in which the feature amount may be defective in the multi-class classification including the cases described above.
The embodiments and other examples of the present invention have been described above, but the present invention is not limited to the aspects described above and can have various modifications without departing from the gist of the present invention.

Explanation of References

    10: multi-class classification device
    100: processing unit
    102: input processing unit
    104: selection processing unit
    106: quantification processing unit
    108: optimization processing unit
    110: determination processing unit
    112: acquisition processing unit
    114: class determination processing unit
    115: output processing unit
    116: CPU
    118: ROM
    120: RAM
    200: storage unit
    300: display unit
    310: monitor
    400: operation unit
    410: keyboard
    420: mouse
    500: external server
    510: external database
    900: measurement point

901: measurement point
903: measurement point
904: measurement point
905: measurement point
906: measurement point
907: measurement point
908: measurement point
NW: network
S100 to S124: each processing of multi-class classification method

**Claims**

1. A feature amount selection method of selecting a feature amount group to be used for determining which of N (two or more) classes a sample belongs to, the feature amount selection method comprising:

   an input step of inputting a learning data set including a known sample group belonging to a given class, which is a target, and a feature amount group of the known sample group; and
   a selection step of selecting a feature amount group needed for class determination for an unknown sample of which a belonging class is unknown, from the feature amount group based on the learning data set,
   wherein the selection step includes

   a quantification step of, by a pairwise coupling that combines two classes among the N classes, quantifying a discrimination possibility between the two classes in accordance with each feature amount of the selected feature amount group by using the learning data set,
   an optimization step of totalizing the quantified discrimination possibilities for all the pairwise couplings and selecting a combination of the feature amount groups for which a result of the totalization is to be optimized,
   a base class designation step of designating one or more base classes from the N classes in advance in a separate frame, and
   a totalization step of, for a pairwise coupling of a first class and a second class which do not include the base class among the N classes, further totalizing a discrimination possibility of pairwise between the first class and the base class and a discrimination possibility of pairwise between the second class and the base class for a feature amount having the discrimination possibility quantified in the quantification step, and

   in the optimization step, a balance degree of a result of the totalization in the totalization step is evaluated to select a combination of the feature amount groups.

2. A feature amount selection method of selecting a feature amount group to be used for determining which of N (two or more) classes a sample belongs to, the feature amount selection method comprising:

   an input step of inputting a learning data set including a known sample group belonging to a given class, which is a target, and a feature amount group of the known sample group; and
   a selection step of selecting a feature amount group needed for class determination for an unknown sample of which a belonging class is unknown, from the feature amount group based on the learning data set,
   wherein the selection step further includes

   a quantification step of, by a pairwise coupling that combines two classes among the N classes, quantifying a discrimination possibility between the two classes in accordance with each feature amount of the selected feature amount group by using the learning data set,
   an optimization step of totalizing the quantified discrimination possibilities for all the pairwise couplings and selecting a combination of the feature amount groups for which a result of the totalization is to be optimized,
   a base class designation step of designating two or more base classes from the N classes in advance in a separate frame, and
   a limitation step of limiting a selection target of the feature amount group to a feature amount having no discrimination possibility between all the designated base classes.

3. The feature amount selection method according to claim 1 or 2, further comprising:

a first marking step of marking a part of the given classes as first discrimination unneeded class groups that do not need to be discriminated from each other, and

a first exclusion step of excluding the pairwise coupling of the marked first discrimination unneeded class groups from pairwise couplings to be expanded,

wherein a class belonging to the N classes and being designated as a class group that does not need to be discriminated from the base class is excluded from a target of balance selection.

4. A feature amount selection program causing a computer to execute a feature amount selection method of selecting a feature amount group to be used for determining which of N (two or more) classes a sample belongs to, the feature amount selection method comprising:

an input step of inputting a learning data set including a known sample group belonging to a given class, which is a target, and a feature amount group of the known sample group; and

a selection step of selecting a feature amount group needed for class determination for an unknown sample of which a belonging class is unknown, from the feature amount group based on the learning data set, wherein the selection step includes

a quantification step of, by a pairwise coupling that combines two classes among the N classes, quantifying a discrimination possibility between the two classes in accordance with each feature amount of the selected feature amount group by using the learning data set,

an optimization step of totalizing the quantified discrimination possibilities for all the pairwise couplings and selecting a combination of the feature amount groups for which a result of the totalization is to be optimized,

a base class designation step of designating one or more base classes from the N classes in advance in a separate frame, and

a totalization step of, for a pairwise coupling of a first class and a second class which do not include the base class among the N classes, further totalizing a discrimination possibility of pairwise between the first class and the base class and a discrimination possibility of pairwise between the second class and the base class for a feature amount having the discrimination possibility quantified in the quantification step, and

in the optimization step, a balance degree of a result of the totalization in the totalization step is evaluated to select a combination of the feature amount groups.

5. A feature amount selection program causing a computer to execute a feature amount selection method of selecting a feature amount group to be used for determining which of N (two or more) classes a sample belongs to, the feature amount selection method comprising:

an input step of inputting a learning data set including a known sample group belonging to a given class, which is a target, and a feature amount group of the known sample group; and

a selection step of selecting a feature amount group needed for class determination for an unknown sample of which a belonging class is unknown, from the feature amount group based on the learning data set, wherein the selection step further includes

a quantification step of, by a pairwise coupling that combines two classes among the N classes, quantifying a discrimination possibility between the two classes in accordance with each feature amount of the selected feature amount group by using the learning data set,

an optimization step of totalizing the quantified discrimination possibilities for all the pairwise couplings and selecting a combination of the feature amount groups for which a result of the totalization is to be optimized,

a base class designation step of designating two or more base classes from the N classes in advance in a separate frame, and

a limitation step of limiting a selection target of the feature amount group to a feature amount having no discrimination possibility between all the designated base classes.

6. A feature amount selection device that selects a feature amount group to be used for determining which of N (two or more) classes a sample belongs to, the feature amount selection device comprising:

a processor,
wherein the processor executes

input processing of inputting a learning data set including a known sample group belonging to a given class, which is a target, and a feature amount group of the known sample group, and

selection processing of selecting a feature amount group needed for class determination for an unknown sample of which a belonging class is unknown, from the feature amount group based on the learning data set,

the selection processing includes

quantification processing of, by a pairwise coupling that combines two classes among the N classes, quantifying a discrimination possibility between the two classes in accordance with each feature amount of the selected feature amount group by using the learning data set,

optimization processing of totalizing the quantified discrimination possibilities for all the pairwise couplings and selecting a combination of the feature amount groups for which a result of the totalization is to be optimized,

base class designation processing of designating one or more base classes from the N classes in advance in a separate frame, and

totalization processing of, for a pairwise coupling of a first class and a second class which do not include the base class among the N classes, further totalizing a discrimination possibility of pairwise between the first class and the base class and a discrimination possibility of pairwise between the second class and the base class for a feature amount having the discrimination possibility quantified in the quantification processing, and

in the optimization processing, the processor evaluates a balance degree of a result of the totalization in the totalization processing to select a combination of the feature amount groups.

7. A feature amount selection device that selects a feature amount group to be used for determining which of N (two or more) classes a sample belongs to, the feature amount selection device comprising:

a processor,
wherein the processor executes

input processing of inputting a learning data set including a known sample group belonging to a given class, which is a target, and a feature amount group of the known sample group, and

selection processing of selecting a feature amount group needed for class determination for an unknown sample of which a belonging class is unknown, from the feature amount group based on the learning data set,

the selection processing further includes

quantification processing of, by a pairwise coupling that combines two classes among the N classes, quantifying a discrimination possibility between the two classes in accordance with each feature amount of the selected feature amount group by using the learning data set,

optimization processing of totalizing the quantified discrimination possibilities for all the pairwise couplings and selecting a combination of the feature amount groups for which a result of the totalization is to be optimized,

base class designation processing of designating two or more base classes from the N classes in advance in a separate frame, and

limitation processing of limiting a selection target of the feature amount group to a feature amount having no discrimination possibility between all the designated base classes.

8. A multi-class classification method of determining, in a case in which N is an integer of 2 or more, which of N classes a sample belongs to, from a feature amount of the sample, the multi-class classification method comprising:

an acquisition step of acquiring, based on a feature amount group selected by using the feature amount selection method according to claim 1 or 2, a feature amount value of the selected feature amount group; and

a multi-class classification step of performing multi-class classification based on the acquired feature amount value, which includes a binary-class classification step using a binary-class classifier associated with a pairwise coupling marked in the selection of the feature amount group,

wherein the multi-class classification step further includes

a base class designation step of designating one or more base classes from the N classes in advance in a separate frame, and

a first evaluation step of, in the binary-class classification step of the base class and a first class which is any class other than the base class, in a case in which a feature amount of a given sample is close to the first class, performing weighting of the feature amount such that a case in which a discrimination result of the multi-class classification is the first class is increased.

9. A multi-class classification method of determining, in a case in which N is an integer of 2 or more, which of N classes a sample belongs to, from a feature amount of the sample, the multi-class classification method comprising:

an acquisition step of acquiring, based on a feature amount group selected by using a feature amount selection method, a feature amount value of the selected feature amount group; and

a multi-class classification step of performing multi-class classification based on the acquired feature amount value, which includes a binary-class classification step using a binary-class classifier associated with a pairwise coupling marked in the selection of the feature amount group,

wherein the multi-class classification step further includes

a base class designation step of designating one or more base classes from the N classes in advance in a separate frame, and

a first evaluation step of, in the binary-class classification step of the base class and a first class which is any class other than the base class, in a case in which a feature amount of a given sample is close to the first class, performing weighting of the feature amount such that a case in which a discrimination result of the multi-class classification is the first class is increased,

the feature amount selection method includes

an input step of inputting a learning data set including a known sample group belonging to a given class, which is a target, and a feature amount group of the known sample group, and

a selection step of selecting a feature amount group needed for class determination for an unknown sample of which a belonging class is unknown, from the feature amount group based on the learning data set, and

the selection step includes

a quantification step of, by a pairwise coupling that combines two classes among the N classes, quantifying a discrimination possibility between the two classes in accordance with each feature amount of the selected feature amount group by using the learning data set, and

an optimization step of totalizing the quantified discrimination possibilities for all the pairwise couplings and selecting a combination of the feature amount groups for which a result of the totalization is to be optimized.

10. The multi-class classification method according to claim 8 or 9, further comprising:

a marking step of marking a part of given classes as discrimination unneeded class groups that do not need to be discriminated from each other; and

an exclusion step of excluding the pairwise coupling of the marked discrimination unneeded class groups from pairwise couplings to be expanded,

wherein the multi-class classification step is performed by using a class belonging to the N classes and being designated as a class group that does not need to be discriminated as the base class.

11. The multi-class classification method according to any one of claims 8 to 10, further comprising:

a reference step of, for a feature amount having a discrimination possibility in a pairwise coupling for any second class and third class belonging to the N classes, further referring to a discrimination possibility of pairwise of the second class and the base class and a discrimination possibility of pairwise of the third class and the base class;

a second evaluation step of, as a result of the reference, for the second class, in a case in which there is the discrimination possibility of the pairwise of the second class and the base class and a value of the feature amount is close to the second class, performing weighting such that a case in which a discrimination result of the binary-class classification step is the second class is increased; and

a third evaluation step of, as a result of the reference, for the third class, in a case in which there is the discrimination possibility of the pairwise of the third class and the base class and a value of the feature amount is close to the third class, performing weighting such that a case in which a discrimination result of the binary-class classification step is the third class is increased.

12. The multi-class classification method according to claim 11, further comprising:

a configuration step of configuring a multi-class classifier from the binary-class classifier by

a target value setting step of setting a target value of a misclassification probability of the sample,
a first probability evaluation step of evaluating a first misclassification probability which is a probability in which a sample, which originally belongs to the base class, is misclassified into any different class other than the base class by the weighting,
a second probability evaluation step of evaluating a second misclassification probability which is a probability in which a sample, which originally belongs to the different class, is misclassified into the base class, and
a weighting adjustment step of adjusting the weighting such that the first misclassification probability and the second misclassification probability fall within the target value or such that deviation amounts of the first misclassification probability and the second misclassification probability from the target value are decreased,

wherein, in the multi-class classification step, the multi-class classification is performed by using the configured multi-class classifier.

13. The multi-class classification method according to claim 12, further comprising:

a configuration step of configuring a multi-class classifier from the binary-class classifier by

an evaluation parameter setting step of setting a misclassification evaluation parameter which is a part or all of the target value of the misclassification probability of the sample, the number of feature amounts having a discrimination possibility for a pairwise coupling of any first class other than the base class and the base class, reliability of the feature amount, and an assumed defective rate of the feature amount, and
a weighting setting step of setting the weighting within a weighting range calculated by the misclassification evaluation parameter,

wherein, in the multi-class classification step, the multi-class classification is performed by using the configured multi-class classifier.

14. The multi-class classification method according to claim 13,
wherein, in the second evaluation step and the third evaluation step, the weighting is set by learning a part or all of the misclassification evaluation parameters from any first learning data set.

15. The multi-class classification method according to any one of claims 11 to 14,
wherein, in the weighting setting step, the weighting is set such that a performance of the multi-class classification is improved based on any second learning data set.

16. The multi-class classification method according to any one of claims 11 to 15, further comprising:
a first warning step of issuing a warning to a user in a case in which an amount of the weighting does not allow a performance of the multi-class classification to fall within a performance target or a second warning step of issuing a warning to the user in a case in which the performance target is predicted to be achievable without performing the weighting.

17. A multi-class classification program causing a computer to execute a multi-class classification method of determining, in a case in which N is an integer of 2 or more, which of N classes a sample belongs to, from a feature amount of the sample, the multi-class classification method comprising:

an acquisition step of acquiring, based on a feature amount group selected by using the feature amount selection method according to claim 1 or 2, a feature amount value of the selected feature amount group; and
a multi-class classification step of performing multi-class classification based on the acquired feature amount value, which includes a binary-class classification step using a binary-class classifier associated with a pairwise coupling marked in the selection of the feature amount group,
wherein the multi-class classification step further includes

a base class designation step of designating one or more base classes from the N classes in advance in a separate frame, and
a first evaluation step of, in the binary-class classification step of the base class and a first class which is any class other than the base class, in a case in which a feature amount of a given sample is close to the first class, performing weighting of the feature amount such that a case in which a discrimination result of the multi-class classification is the first class is increased.

18. A multi-class classification program causing a computer to execute a multi-class classification method of determining, in a case in which N is an integer of 2 or more, which of N classes a sample belongs to, from a feature amount of the sample, the multi-class classification method comprising:

an acquisition step of acquiring, based on a feature amount group selected by using a feature amount selection method, a feature amount value of the selected feature amount group; and
a multi-class classification step of performing multi-class classification based on the acquired feature amount value, which includes a binary-class classification step using a binary-class classifier associated with a pairwise coupling marked in the selection of the feature amount group,
wherein the multi-class classification step further includes

a base class designation step of designating one or more base classes from the N classes in advance in a separate frame, and
a first evaluation step of, in the binary-class classification step of the base class and a first class which is any class other than the base class, in a case in which a feature amount of a given sample is close to the first class, performing weighting of the feature amount such that a case in which a discrimination result of the multi-class classification is the first class is increased,

the feature amount selection method includes

an input step of inputting a learning data set including a known sample group belonging to a given class, which is a target, and a feature amount group of the known sample group, and
a selection step of selecting a feature amount group needed for class determination for an unknown sample of which a belonging class is unknown, from the feature amount group based on the learning data set, and

the selection step includes

a quantification step of, by a pairwise coupling that combines two classes among the N classes, quantifying a discrimination possibility between the two classes in accordance with each feature amount of the selected feature amount group by using the learning data set, and
an optimization step of totalizing the quantified discrimination possibilities for all the pairwise couplings and selecting a combination of the feature amount groups for which a result of the totalization is to be optimized.

19. A multi-class classification device that determines, in a case in which N is an integer of 2 or more, which of N classes a sample belongs to, from a feature amount of the sample, the multi-class classification device comprising:

a processor,
wherein the processor executes

acquisition processing of acquiring, based on a feature amount group selected by using the feature amount selection method according to claim 1 or 2, a feature amount value of the selected feature amount group, and
multi-class classification processing of performing multi-class classification based on the acquired feature amount value, which includes binary-class classification processing using a binary-class classifier associated with a pairwise coupling marked in the selection of the feature amount group, and

the multi-class classification processing further includes

base class designation processing of designating one or more base classes from the N classes in advance in a separate frame, and

first evaluation processing of, in the binary-class classification processing of the base class and a first class which is any class other than the base class, in a case in which a feature amount of a given sample is close to the first class, performing weighting of the feature amount such that a case in which a discrimination result of the multi-class classification is the first class is increased.

20. A multi-class classification device that determines, in a case in which N is an integer of 2 or more, which of N classes a sample belongs to, from a feature amount of the sample, the multi-class classification device comprising:

a processor,
wherein the processor executes

acquisition processing of acquiring, based on a feature amount group selected by using a feature amount selection device, a feature amount value of the selected feature amount group, and
multi-class classification processing of performing multi-class classification based on the acquired feature amount value, which includes binary-class classification processing using a binary-class classifier associated with a pairwise coupling marked in the selection of the feature amount group,

the multi-class classification processing further includes

base class designation processing of designating one or more base classes from the N classes in advance in a separate frame, and
first evaluation processing of, in the binary-class classification processing of the base class and a first class which is any class other than the base class, in a case in which a feature amount of a given sample is close to the first class, performing weighting of the feature amount such that a case in which a discrimination result of the multi-class classification is the first class is increased,

the feature amount selection device executes

input processing of inputting a learning data set including a known sample group belonging to a given class, which is a target, and a feature amount group of the known sample group, and
selection processing of selecting a feature amount group needed for class determination for an unknown sample of which a belonging class is unknown, from the feature amount group based on the learning data set, and

the selection processing includes

quantification processing of, by a pairwise coupling that combines two classes among the N classes, quantifying a discrimination possibility between the two classes in accordance with each feature amount of the selected feature amount group by using the learning data set, and
optimization processing of totalizing the quantified discrimination possibilities for all the pairwise couplings and selecting a combination of the feature amount groups for which a result of the totalization is to be optimized.

21. A feature amount set that is used by a multi-class classification device to determine which of N (two or more) classes a given sample belongs to,

wherein one or more base classes are designated from the N classes in advance in separate frame,
the feature amount set comprises a feature amount data set of a sample belonging to each class, which is a target, in a case in which, by a pairwise coupling that combines two classes among the N classes, a discrimination possibility between the two classes in accordance with each feature amount of a selected feature amount group is quantified with reference to the feature amount data set, the feature amount set is marked to be discriminable by at least one feature amount in all the pairwise couplings, and
for a pairwise coupling of a first class and a second class which do not include the base class among the N classes, for a feature amount having the quantified discrimination possibility, a discrimination possibility of pairwise between the first class and the base class and a discrimination possibility of pairwise between the second class and the base class are further balanced.

**22.** A non-transitory computer-readable recording medium on which the program according to claim 4, 5, 17, or 18 is recorded.

# FIG. 1

STEP 1  FEATURE SELECTION

STEP 2  MULTI-CLASS CLASSIFICATION

EP 4 220 499 A1

# FIG. 2

# FIG. 3

100

| INPUT PROCESSING UNIT | 102 |

| SELECTION PROCESSING UNIT | 104 |
| QUANTIFICATION PROCESSING UNIT | 106 |
| OPTIMIZATION PROCESSING UNIT | 108 |

| DETERMINATION PROCESSING UNIT | 110 |
| ACQUISITION PROCESSING UNIT | 112 |
| CLASS DETERMINATION PROCESSING UNIT | 114 |

| OUTPUT PROCESSING UNIT | 115 |

| CPU | 116 |

| ROM | 118 |

| RAM | 120 |

# FIG. 4

| | |
|---|---|
| INPUT STEP | S100 |

↓

| | |
|---|---|
| SELECTION STEP | S110 |
| QUANTIFICATION STEP | S112 |
| OPTIMIZATION STEP | S114 |

↓

| | |
|---|---|
| DETERMINATION STEP | S120 |
| ACQUISITION STEP | S122 |
| CLASS DETERMINATION STEP | S124 |

## FIG. 5A

## FIG. 5B

## FIG. 6A

CLASS

FEATURE AMOUNT

|     | A | B | C |
|-----|---|---|---|
| #1  | 1 | 1 | 1 |
| #2  | 0 | 1 | 1 |
| #3  | 1 | 0 | 0 |
| #4  | 1 | 1 | 0 |
| #5  | 0 | 0 | 0 |

## FIG. 6B

PAIRWISE
(CLASS BINARY RELATIONSHIP)

| A | B | C |
|---|---|---|

| A | B |   |
|---|---|---|

| A |   | C |
|---|---|---|

|   | B | C |
|---|---|---|

## FIG. 6C

|     | {A,B} | {A,C} | {B,C} |
|-----|-------|-------|-------|
| #1  | 0     | 0     | 0     |
| #2  | 1     | 1     | 0     |
| #3  | 1     | 1     | 0     |
| #4  | 0     | 1     | 1     |
| #5  | 0     | 0     | 0     |

FIG. 7A

FIG. 7B

EP 4 220 499 A1

FIG. 8

CLASS GROUP THAT NEEDS TO BE
DISCRIMINATED AS NOT T BUT DOES NOT NEED
TO BE DISCRIMINATED BETWEEN CLASSES

CLASS GROUP THAT NEEDS
TO BE DISCRIMINATED

NOT EXPANDED

| T1 | T2 | . . . | Tm | N1 | N2 | . . . | Nn |

N × N

EXAMPLE: CANCER TISSUE

EXAMPLE: NORMAL TISSUE

T × T

PAIRWISE EXPANSION

T × N

| T1 | T2 | | |
| T1 | | T3 | |

. . .

| T1 | | N1 | |
| T1 | | | N2 |

| | T2 | N1 | |
| | T2 | | N2 |

. . .

EP 4 220 499 A1

# FIG. 9A

CLASS B BELONGING
SAMPLE DISTANCE
SPACE DISTRIBUTION

TYPE Z

TYPE Y

TYPE X

# FIG. 9B

FEATURE
AMOUNT i

SUBCLASS X?

SUBCLASS Y?

CLASS A          CLASS B

## FIG. 10A

| | {A,B} |
|---|---|
| #1 | +1 |
| #2 | 0 |
| ... | |
| SUBTOTAL | 24 |

| | {A,C} |
|---|---|
| #3 | −1 |
| #4 | +1 |
| ... | |
| SUBTOTAL | −2 |

| | {A,...} |
|---|---|
| #... | +1 |
| | 0 |
| ... | |
| SUBTOTAL | 13 |

## FIG. 10B

| {A,*} | A |
|---|---|
| {A,B} | +1 |
| {A,C} | −1 |
| {A,...} | ... |
| TOTAL | 7 |

...

| {D,*} | D |
|---|---|
| {D,A} | +1 |
| {D,B} | 0 |
| {D,...} | ... |
| TOTAL | 10 |

## FIG. 10C

| CLASS | SCORE |
|---|---|
| $D_{(1)}$ | 10 |
| $N_{(2)}$ | 8 |
| $A_{(3)}$ | 7 |
| ... | |

# FIG. 11

WINNER OF N·A AND BRUTE
FORCE MATCH FIRST RANK
D ARE COMPARED DIRECTLY

BRUTE FORCE MATCH
SECOND RANK N AND BRUTE
FORCE MATCH THIRD RANK
A ARE COMPARED DIRECTLY

$D_{(1)}$

$N_{(2)}$

$A_{(3)}$

BRUTE FORCE
MATCH
FIRST RANK

BRUTE FORCE
MATCH
SECOND RANK

BRUTE FORCE
MATCH
THIRD RANK

# FIG. 12

| | CLASS | SUBTYPE | SAMPLE SIZE | | TOTAL |
|---|---|---|---|---|---|
| | TISSUE | CANCER CLASSIFICATION | CANCER | NORMAL | |
| 1a | LARGE INTESTINE | COLONIC GLAND CANCER | 312 | 38 | 350 |
| 1b | ″ | RECTAL GLAND CANCER | 98 | 7 | 105 |
| 2 | STOMACH | STOMACH CANCER | 395 | 2 | 397 |
| 3a | LUNG | LUNG CANCER | 473 | 32 | 505 |
| 3b | ″ | LUNG EPITHELIUM SQUAMOUS CANCER | 192 | 42 | 234 |
| 4 | BREAST | BREAST CANCER | 792 | 97 | 889 |
| 5 | PROSTATE | PROSTATE CANCER | 502 | 50 | 552 |
| 6 | PANCREAS | PANCREATIC CANCER | 184 | 10 | 194 |
| 7 | LIVER | LIVER CANCER | 377 | 50 | 427 |
| 8 | UTERUS | CERVICAL CANCER | 307 | 3 | 310 |
| 9a | KIDNEY | * CLEAR CELL CANCER | – | 160 | 160 |
| 9b | ″ | * PAPILLARY RENAL CELL CANCER | – | 45 | 45 |
| 10 | THYROID GLAND | – | – | 56 | 56 |
| 11 | HEAD AND NECK | – | – | 50 | 50 |
| 12 | UTERINE BODY | – | – | 46 | 46 |
| 13 | BLADDER/UROTHELIUM | – | – | 21 | 21 |
| 14 | ESOPHAGUS | – | – | 16 | 16 |
| 15 | BILE DUCT | – | – | 9 | 9 |
| 16 | BONE/SOFT TISSUE | – | – | 4 | 4 |
| 17 | SUPRARENAL GLAND | – | – | 3 | 3 |
| 18 | THYMUS | – | – | 2 | 2 |
| 19 | SKIN | – | – | 2 | 2 |
| 20 | BRAIN | – | – | 1 | 1 |
| 21 | BLOOD | – | – | 732 | 732 |
| | TOTAL | | 3,632 | 1,478 | 5,110 |

EP 4 220 499 A1

FIG. 13

| METHOD | ACCURACY ITEMED | AVERAGE VALUE | LARGE INTESTINE CANCER | STOMACH CANCER | LUNG CANCER | BREAST CANCER | PROSTATE CANCER | PANCREATIC CANCER | LIVER CANCER | CERVICAL CANCER |
|---|---|---|---|---|---|---|---|---|---|---|
| PRESENT INVENTION | F-NUMBER | 0.953 | 0.976 | 0.938 | 0.965 | 0.969 | 0.974 | 0.883 | 0.965 | 0.957 |
| | SENSITIVITY | 0.952 | 0.980 | 0.929 | 0.946 | 0.962 | 0.960 | 0.946 | 0.941 | 0.948 |
| | GOODNESS OF FIT | 0.957 | 0.971 | 0.948 | 0.984 | 0.977 | 0.988 | 0.829 | 0.989 | 0.967 |
| RELATED-ART METHOD | F-NUMBER | 0.809 | 0.835 | 0.650 | 0.756 | 0.859 | 0.970 | 0.604 | 0.906 | 0.889 |
| | SENSITIVITY | 0.808 | 0.833 | 0.594 | 0.910 | 0.886 | 0.964 | 0.522 | 0.872 | 0.883 |
| | GOODNESS OF FIT | 0.821 | 0.837 | 0.718 | 0.646 | 0.834 | 0.976 | 0.716 | 0.943 | 0.895 |

## FIG. 14

| METHOD | DATA SET | AVERAGE VALUE | LARGE INTESTINE CANCER | STOMACH CANCER | LUNG CANCER | BREAST CANCER | PROSTATE CANCER | PANCREATIC CANCER | LIVER CANCER | CERVICAL CANCER |
|---|---|---|---|---|---|---|---|---|---|---|
| PRESENT INVENTION | DIFFERENCE | 0.008 | 0.012 | 0.024 | −0.016 | 0.005 | 0.006 | 0.017 | 0.011 | 0.007 |
| | LEARNING | 0.962 | 0.988 | 0.962 | 0.948 | 0.975 | 0.980 | 0.901 | 0.976 | 0.965 |
| | TEST | 0.953 | 0.976 | 0.938 | 0.965 | 0.969 | 0.974 | 0.883 | 0.965 | 0.957 |
| RELATED-ART METHOD | DIFFERENCE | 0.185 | 0.160 | 0.345 | 0.222 | 0.123 | 0.030 | 0.396 | 0.091 | 0.111 |
| | LEARNING | 0.993 | 0.995 | 0.995 | 0.978 | 0.982 | 1.000 | 1.000 | 0.997 | 1.000 |
| | TEST | 0.809 | 0.835 | 0.650 | 0.756 | 0.859 | 0.970 | 0.604 | 0.906 | 0.889 |

# FIG. 15

# FIG. 16

(a)

CLASSIFICATION RESULT CLASS AND HIGHER RANK CAN BE CONFIRMED

**DETERMINATION SCORE/FINAL RESULT TABLE**

| Sample | CANCER TISSUE 247 |
|---|---|
| Estimated Class | CANCER TISSUE 1 |
| Score Ranking [1] | CANCER TISSUE 1(79) |
| Score Ranking [2] | CANCER TISSUE 3(76) |
| CANCER TISSUE 1 | 79 |
| CANCER TISSUE 3 | 76 |
| CANCER TISSUE 4 | -80 |
| CANCER TISSUE 5 | 46 |
| NORMAL TISSUE 3 | 17 |
| NORMAL TISSUE 2 | 23 |
| NORMAL TISSUE 1 | -7 |
| <CANCER TISSUE 1 CANCER TISSUE 3> | 9 |
| <CANCER TISSUE 1 CANCER TISSUE 4> | 151 |
| <CANCER TISSUE 1 CANCER TISSUE 5> | 32 |

SIMILAR SCORE WITH EACH CLASS AND PAIR SCORE CAN BE CONFIRMED

REASON OF SELECTING MARKER WHICH IS BASIS FOR PAIR DETERMINATION CAN BE CONFIRMED

* ACTUAL DETERMINATION TRANSITION IN TEST DATA IS EXTRACTED

(b)

SELECTED MARKER LIST

| Marker | <CANCER TISSUE 1 CANCER TISSUE 2> | <CANCER TISSUE 1 CANCER TISSUE 3> | <CANCER TISSUE 1 CANCER TISSUE 4> | <CANCER TISSUE 1 CANCER TISSUE 5> |
|---|---|---|---|---|
| MARKER 1 | 1 | | | 1 |
| MARKER 2 | 0 | | 0 | 1 |
| MARKER 3 | 0 | | | 1 |
| MARKER 4 | 0 | 1 | 1 | 1 |
| MARKER 5 | 0 | 0 | | 0 |
| MARKER 6 | 0 | 0 | | 0 |
| MARKER 7 | 0 | 0 | 0 | 0 |
| MARKER 8 | 0 | | | 1 |
| MARKER 9 | 0 | 1 | 0 | 0 |
| MARKER 10 | 0 | 1 | | 1 |
| MARKER 11 | 0 | 0 | 0 | 0 |
| MARKER 12 | 0 | 0 | | 0 |
| MARKER 13 | 0 | 0 | 1 | 1 |
| MARKER 14 | 0 | 0 | 0 | 0 |
| MARKER 15 | 0 | 0 | 0 | 0 |
| MARKER 16 | 0 | 0 | | 1 |
| MARKER 17 | 0 | 0 | | 1 |
| MARKER 18 | 0 | 0 | 1 | 0 |
| MARKER 19 | 0 | 0 | 0 | 1 |
| MARKER 20 | 0 | 0 | 0 | 0 |
| MARKER 21 | 0 | 0 | 1 | 1 |
| MARKER 22 | 0 | 0 | 0 | 0 |
| MARKER 23 | 0 | 0 | 1 | 1 |
| MARKER 24 | 0 | 0 | 0 | 0 |
| MARKER 25 | 0 | 0 | 0 | 1 |
| MARKER 26 | 0 | 0 | | 0 |
| MARKER 27 | 0 | 0 | 1 | 0 |
| MARKER 28 | 0 | 0 | 0 | 0 |
| MARKER 29 | 0 | 0 | | 1 |
| MARKER 30 | 0 | 0 | 1 | 1 |
| MARKER 31 | 0 | 0 | 0 | 1 |
| MARKER 32 | 0 | 0 | 1 | 1 |
| MARKER 33 | 0 | 0 | 0 | 0 |

## FIG. 17

## FIG. 18

# FIG. 19A

# FIG. 19B

Tissue Biopsy

Liquid Biopsy

# FIG. 20

Tissue Biopsy

Liquid Biopsy

# FIG. 21

BASE PATTERN
(MAY BE CONSIDERED
TO BE LARGE
AMOUNT/COMPLETE)

TARGET/DETECTION
PATTERN

PAIR SCORE

| | |
|---|---|
| −1 | −1 | ← 903
| X | X |
| +1 | +W | ← 904
| X | X |

CORRECTION SCORE

# FIG. 22

BASE PATTERN

TARGET
A PATTERN

TARGET
B PATTERN

COLLATION

-1   ← 905

x

+1?   ← 906

x

# FIG. 23

X PATTERN MATCH NUMBER (A+)

$T_{Bi\_x/o}$: DEVIATION NUMBER OF PATTERN (NON) MATCH NUMBER AT BINARY DISTRIBUTION/PROBABILITY $\alpha$ $\beta$

OBVIOUS

TARGET X

DEFECTIVE

BINARY DISTRIBUTION $Bi_{x+}(p = r(1 - m), n)$

$C_{x+} = r(1 - m)n - T_{Bi\_x+}(\beta)$

| SCORE | {X,O} |
|-------|-------|
| #1 | +1/0/-1 |
| #2 | +1/0/-1 |
| ... | |
| #n | +1/0/-1 |
| TOTAL | |

| PARAMETER | DEFINITION |
|-----------|------------|
| m | DEFECTIVE RATE |
| r | MARKER RELIABILITY = PROBABILITY THAT SIGNAL CAN BE ACQUIRED AS ASSUMED * SYNTHESIS EVALUATION VALUE OF MODEL/MEASUREMENT SYSTEM |
| n | PAIRWISE COVER NUMBER |
| $\alpha, \beta$ | ALLOWABLE VALUE OF MISCLASSIFICATION |

《《W SET WIDTH》》

$(n - C_{X+})C_{X+} \le W \le (n - C_{O-})C_{O-}$

IT IS EQUAL TO OR MORE THAN LOWER LIMIT VALUE AT WHICH TARGET X IS CORRECTLY RECOGNIZED AS X AND EQUAL TO OR LOWER THAN UPPER LIMIT VALUE AT WHICH BASE O IS NOT MISTAKENLY CLASSIFIED INTO X

BASE O

MISTAKEN

CORRECT

BINARY DISTRIBUTION $Bi_{O-}(p = 1 - r, n)$

$C_{O-} = (1 - r)n + T_{Bi\_O-}(\alpha)$

O PATTERN NON-MATCH NUMBER (O-)

EP 4 220 499 A1

# FIG. 24

BASE PATTERN

TARGET
A PATTERN

TARGET
B PATTERN

-1 ← 907

×

COLLATION

+W?
+1? ← 908

×

## FIG. 25A

CLASS

| MARKER | | BASE 0 | TARGET A | TARGET B |
|---|---|---|---|---|
| | #1 | 0 | 0 | 1 |
| | #2 | 0 | 0 | 1 |
| | #3 | 0 | 1 | 0 |
| | #4 | 1 | 1 | 0 |
| | #5 | 1 | 0 | 1 |
| | #6 | 1 | 0 | 1 |

\* MARKER VALUE

## FIG. 25B

SELECTED PAIRWISE

| MARKER | | {A,B} | {O,A} | {O,B} |
|---|---|---|---|---|
| | #1 | 1 | 0 | 1 |
| | #2 | 1 | 0 | 1 |
| | #3 | 1 | 1 | 0 |
| | #4 | 1 | 0 | 1 |
| | #5 | 1 | 1 | 0 |
| | #6 | 1 | 1 | 0 |

\* XOR VALUE (PAIRWISE DISCRIMINATION FLAG VALUE)

SELECT MARKER SET SUCH THAT {0, A} = 1/{0, B} = 1 ARE SAME NUMBER IN AB DISCRIMINATION MARKER {A, B} = 1

\* GENERALLY, {0, A}xor{0, B} IS EASTABLISHED IN AB DISCRIMINATION MARKER {A, B} = 1

EP 4 220 499 A1

## FIG. 26

OPEN DATA

INPUT AS IT IS

LEARNING SAMPLE

SIMULATION

TEST SAMPLE

BLOOD PLASMA PATTERN

FEATURE SELECTOR

THE NUMBER OF MARKERS: 250

PROCESSING

| MARKER | METHYLATION DEGREE |
|---|---|
| SITE 1 | 12.1% |
| SITE 2 | 2.7% |
| SITE 3 | 11.6% |
| . . . | . . . |

MULTI-CLASS CLASSIFIER

BREAST CANCER
LUNG CANCER
STOMACH CANCER
. . .
NORMAL BREAST
NORMAL LUNG
NORMAL STOMACH
. . .
NORMAL BLOOD

OPEN DATA × BLOOD PLASMA PATTERN
→RANDOMLY INSERT BLOOD PLASMA
PATTERN INTO OPEN DATA SAMPLE
(DEFECT SIMULATION: INSERTION PROBABILITY
= DEFECTIVE RATE)

EP 4 220 499 A1

## FIG. 27

SIMULATION EVALUATION RESULT OF MARKER DEFECT INFLUENCE

EP 4 220 499 A1

## FIG. 28A

| PARAMETER | SET VALUE | DEFINITION | DESCRIPTION |
|---|---|---|---|
| $n$ | 50 | PAIRWISE COVER NUMBER | MINIMUM NUMBER OF MARKERS FOR BINARY-CLASS DISCRIMINATION |
| $\alpha, \beta$ | 0.2 | ALLOWABLE VALUE OF MISCLASSIFICATION | ALLOWABLE VALUE OF MISCLASSIFICATION OF NORMAL → CANCER, CANCER → NORMAL |
| $r_0$ | 0.95 | NORMAL MARKER RELIABILITY | PROBABILITY THAT NORMAL TISSUE SIGNAL CAN BE ACQUIRED FOLLOWING LEARNING DISTRIBUTION |
| $r_x$ | 0.7 | CANCER MARKER RELIABILITY | PROBABILITY THAT CANCER TISSUE SIGNAL CAN BE ACQUIRED FOLLOWING LEARNING DISTRIBUTION |

## FIG. 28B

| WI DEFECTIVE RATE $m$ | 10% | 20% | 30% | 40% | 50% | 60% | 70% | 80% | 90% |
|---|---|---|---|---|---|---|---|---|---|
| UPPER LIMIT VALUE | 11.5[*1]      *1 FIXED VALUE SINCE IT IS INDEPENDENT FROM $m$ | | | | | | | | |
| LOWER LIMIT VALUE | 0.8 | 1.1[*2] | 1.4 | 1.9 | 2.6 | 4.0 | 6.1 | 11.5 | 49.0 |
| SETTING POSSIBILITY | - | - | ○ | ○ | ○ | ○ | ○ | ○ | × |

EP 4 220 499 A1

## FIG. 29

FIG. 30

## INTERNATIONAL SEARCH REPORT

| International application No. |
| --- |
| **PCT/JP2021/034251** |

**A. CLASSIFICATION OF SUBJECT MATTER**

*G06N 20/00*(2019.01)i
FI: G06N20/00 130

According to International Patent Classification (IPC) or to both national classification and IPC

**B. FIELDS SEARCHED**

Minimum documentation searched (classification system followed by classification symbols)

G06N20/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2020/012523 A1 (FUJITSU LTD.) 16 January 2020 (2020-01-16) paragraph [0022] | 1-22 |
| A | WO 2018/235568 A1 (RECRUIT COMMUNICATIONS CO., LTD.) 27 December 2018 (2018-12-27) paragraphs [0001]-[0029] | 1-22 |
| A | JP 2017-146745 A (CANON INC.) 24 August 2017 (2017-08-24) paragraphs [0063]-[0080] | 1-22 |
| A | JP 2011-181016 A (FUJIFILM CORP.) 15 September 2011 (2011-09-15) paragraphs [0001]-[0020] | 1-22 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 November 2021** | **22 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/034251**

| Patent document cited in search report | | | Publication date (day/month/year) | Patent family member(s) | Publication date (day/month/year) |
|---|---|---|---|---|---|
| WO | 2020/012523 | A1 | 16 January 2020 | US 2021/0110215 A1 paragraph [0035] EP 3822872 A1 | |
| WO | 2018/235568 | A1 | 27 December 2018 | (Family: none) | |
| JP | 2017-146745 | A | 24 August 2017 | (Family: none) | |
| JP | 2011-181016 | A | 15 September 2011 | US 2011/0243426 A1 paragraphs [0001]-[0028] | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012505453 A

**Non-patent literature cited in the description**

- **HYEON JI et al.** Feature selection for multi-class classification using pairwise class discriminatory measure and covering concept. *ELECTRONICS LETTERS,* 16 March 2000, vol. 36 (6), 524-525